# EUROPEAN PATENT SPECIFICATION

(11) **EP 1 116 831 B1**
(45) Date of publication and mention of the grant of the patent: **23.06.2004**
(21) Application number: 00944409.2
(22) Date of filing: 12.07.2000
(51) Int. Cl.: E04B 1/41, B23B 41/06, B28D 1/14, F16B 13/08, F16B 13/12

(54) **FASTENER, DRIVING JIG FOR EXECUTION OF THE FASTENER, AND DRILL BIT FOR MACHINING UNDERCUT HOLE**
BEFESTIGUNGSELEMENT, ANTRIEBSVORRICHTUNG ZUR AUSFÜHRUNG DES BEFESTIGUNGSELEMENTS UND BOHRMEISEL ZUM HERSTELLEN VON BOHRLÖCHERN MIT HINTERSCHNEIDUNG
ELEMENT DE FIXATION, GABARIT D'ENTRAINEMENT POUR LA REALISATION DE L'ELEMENT DE FIXATION ET TREPAN POUR USINAGE DE TROU DEGAGE

(30) Priority: 21.07.1999 JP 20562999; 10.08.1999 JP 22595499
(43) Date of publication of application: 18.07.2001
(60) Divisional application: 03018152.3
(73) Proprietor: Kabushiki Kaisha Zen Kenchiku Sekkei Jimusho, Minato-ku, Tokyo 107-0061 (JP)
(72) Inventor: SATO, Yoshinori, Setagaya-ku, Tokyo 154-0023 (JP)
(74) Representative: Grünecker, Kinkeldey, Stockmair & Schwanhäusser Anwaltssozietät
(86) International application number: PCT/JP2000/004643
(87) International publication number: WO 2001/006070

(56) References cited:
- EP-A- 0 056 854
- DE-A- 3 701 074
- DE-A- 3 934 554
- JP-A- 3 074 624
- JP-A- 4 228 909
- JP-A- 7 158 626
- JP-U- 5 079 018
- US-A- 4 653 132

## Description

### Technical Field

The present invention relates to improvements in a fastener of a post-installation anchor type which is hammered into a hole drilled to a pre-built concrete structure. More particularly, the present invention relates to a fastener structure which improves a working ability of the fastener so that a sleeve is not detached even when the fastener is installed upwardly and which largely improves a tensile strength by performing a loosening preventing effect in a manner of engaging the sleeve and a plug with each other by convexoconcave engagement after the expansion in the installation operation is executed.

### Background Art

The most popular conventional fastener of a post-installation type is constituted by a sleeve having an expansion portion and a plug (expanding member) having a taper portion for expanding the expansion portion by being inserted into the sleeve, and is basically arranged to fix the sleeve as an anchor to a concrete structure by hammering the plug or sleeve upon installing the fastener into a prepared hole and by expanding the expansion portion by a relative displacement therebetween.

In a structure of such a conventional fastener, since the sleeve and the plug are merely press-fitted under a non-expanded condition of the expansion portion, they tend to be separated. Specifically, when it is installed upwardly, there is a possibility that the operation ability during the installation is degraded by the detaching of the sleeve. Further, since there is no means for restricting a relative position between the expansion portion and the plug even under a condition that the expansion portion is expanded, slipping out of the plug from the sleeve or detaching of the sleeve from the prepared hole tends to be generated by the generation of the loosening between the sleeve and the plug in the case that it receives earthquake or mechanical vibration energy. This degrades the anchor effect and is not suitable. DE 39 34 554 A1 discloses a sleeve that may be expanded and a plug having a taper portion at the front end. Depending on the specific embodiment of such a plug it comprises a number of steps from which at least one has a sharp edge to prevent any sliding back of the plug with respect to the sleeve.

### Disclosure of Invention

The present invention is invented by observing the above-mentioned problems. It is an object of the present invention to provide a fastener which is arranged to prevent a detaching between a sleeve and a plug under a non-expanded condition of an expansion portion and to prevent a loosening between the sleeve and the plug by executing a relative positioning between the expansion portion and the plug after the expansion.

This object is solved by the features of claim 1.

Accordingly, with the invention as claimed in claim 1, since the sleeve and the plug are engaged with each other by the convexoconcave engagement under a non-expanded condition of the expansion portion, both are not separated. Particularly, when it is installed upwardly, the detaching of the sleeve is prevented, and therefore the operation ability thereof is largely improved. Further, by expanding the expansion portion through the hammering of the sleeve or plug upon inserting the fastener in a predetermined prepared hole, the inner peripheral surface of the expansion portion and the outer peripheral surface of the plug are again engaged by the convexoconcave engagement and substantially the relative position therebetween is executed to prevent the detaching of the sleeve. Therefore, even if it receives earthquake or mechanical vibration energy after the installation, no loosening causes between the sleeve and the plug, and the anchor effect is stably maintained for a long term.

With the additional features of claim 2 the invention is adapted to a case that a thickness of a concrete structure to which an prepared hole is formed is not sufficient, and it is difficult to receive the hammering force at a hole bottom surface by seating the sleeve or the plug at the hole bottom surface of the prepared hole. That is, first the sleeve is hammered to the prepared hole, and at this time the flange portion is also hammered to the prepared hole while deforming the flange portion of the sleeve end portion. With this arrangement, a sufficient friction resistance force is generated between an inner peripheral surface of the prepared hole and the sleeve. Under this condition, when the plug in the sleeve is hammered by using the hammering jig, the relative movement between the prepared hole and the sleeve is prevented by the friction resistance force. As a result, the expansion portion is expanded by hammering the plug with respect to the sleeve, and functions as same as those of the invention claimed in claim 1 are performed.

Particularly, when the circumferential groove is formed from an end surface in the flange portion in the invention as claimed in claim 3, an easy deformability of the flange portion at an end portion of the sleeve is further promoted by the existence of this circumferential groove. With this arrangement, for example, even when an opening periphery of the prepared hole is not a complete round, the flange portion is deformed following a shape of the hole and is firmly fitted with an inner periphery of the prepared hole. Therefore, the friction resistance force between the prepared hole and the sleeve, which force is necessary for the plug hammering, is equivalently distributed without offset, and simultaneously this prevents invasion of rain water into the prepared hole.

With the additional features of claim 4, the expansion portion of the sleeve is expanded by hammering the anchor main body portion until the sleeve is contacted with the stepped portion of the anchor main body portion after inserting the fastener to the prepared hole. In this case, when the sleeve and the stepped portion are in contact with each other, it becomes impossible to hammer the anchor main body portion further. Therefore, it is possible to recognize that the expansion portion is sufficiently expanded from the feeling of this contact. Simultaneously, when the anchor main body portion is hammered, the large diameter portion of the anchor main body portion is positively press-fitted to the prepared hole. Therefore, by setting the length of the large diameter portion at a long length in some degree and by setting so that a necessary strength is obtained by press fitting the large diameter portion by a minimum necessary quantity, it is not necessary to strictly control the depth of the prepared hole. That is, even if the projecting length of the large diameter portion projecting from the prepared hole is dispersed after the completion of the installation, no problem causes in the strength as an anchor. Further, since the relative movement between the sleeve and the anchor main body portion is prevented by the contact between the sleeve and the stepped portion of the anchor main body portion, the anchor main body portion is not excessively hammered, and this arrangement performs the effect that a dispersion of the installation condition among individuals of builders is suppressed.

According to the features of claim 5 the large diameter portion of the anchor main body portion is not positively press fitted to the prepared hole, and during the hammering of the anchor main body portion to the sleeve, an installation feeling due to the convexoconcave engagement between the expansion portion and the plug is obtained by the contact between the sleeve and the stepped portion of the anchor main body portion resulting from that both reach the stroke ends thereof.

Accordingly, with the features of claim 5, it becomes possible to easily and actually feel the sufficient expansion of the expansion portion by the predetermined hammering of the anchor main body portion through a completed feeling due to the convexoconcave engagement. It is possible to improve the stability of the installation condition by canceling the dispersion of the installed condition due to the individual difference of builders.

With the features of claim 6, since the expansion portion of the sleeve is further largely expanded into a skirt shape so as to follow the shape of the prepared hole of the undercut type, the strength of the anchor is further improved by a strong anchor effect due to the undercut shape and the multiplier effect due to the convexoconcave engagement between the expansion portion and the plug at the expansion completed time. Particularly, even if cracks are generated in the concrete structure, the sleeve is not detached and performs the extremely strong anchor effect.

Particularly, if a female screw portion or male screw portion is formed at the large diameter portion like as the invention claimed in claim 7, a predetermined structure is fixed by using the female screw portion or the male screw portion as a tightening portion.

By tightening the lock nut in addition to the anchor effect by the expansion of the expansion portion of the sleeve, see claim 8, the expansion portion and the lock nut substantially press-tighten the concrete structure. Therefore, in case that a deformed reinforcing bar is employed as an insertion bar for earthquake-proof reinforcement, the fastener performs an extremely strong strength (proof stress) against load input in both of the tensile direction and the compressing direction.

In case that the invention is employed for fixing a circuit card of electric product and various electronic devices or for installing interior members of an automotive vehicle, a relative positioning between the sleeve and the plug is executed by the convexoconcave engagement between the inner peripheral surface of the expansion portion and the outer peripheral surface simultaneously with expanding the expansion portion of the sleeve. Therefore, even if the fastener receives vibrations after the installation thereof, it is difficult to generate loosening between the expansion portion and the plug, and it is possible to keep the anchor effect for long term. On the other hand, since it is superior in a self reversion property as a property of the resin fastener, see claim 9, in case of disengaging the anchor engagement for repairing or recycle, the plug is hammered in the inverse direction to the expansion period to cancel the expansion of the sleeve, and the fastener is easily removed.

A jig is used for hammering a sleeve or a plug in an installation of a fastener of a post installation type which is constituted by the sleeve having an expansion portion and the plug having a taper portion for expanding the expansion portion by being installed in the sleeve. The hammering jig comprises a rod constituted by integrally forming a punch portion inserted into a hole of an opposite and a shank portion in a longitudinal direction, and an adjustable adapter installed so as to be slidable to the rod in an axial direction by a predetermined quantity, a deformed flange portion is integrally formed at a longitudinally center portion of the fastener installation, two engagement grooves, which are engageable with the deformed flange portion and have different in depth with each other, are formed inside of the adjust adapter with 90° offset in phase, and a projecting length of the punch portion from the adjuster adapter is selectable from two stages by selectively switching an engaged groove to be engaged with the deformed flange portion.

In case that the hammering jig is employed in hammering a plug of a fastener of an inner cone hammering type, by alternatively selecting a projection length of a punch portion directly relating to the hammering of the sleeve or plug though it is a dedicated jig, it is commonly used in the hammering of the sleeve and the plug which are different in the necessary projection length of the punch portion. Further, in some cases, it is possible to commonly use the jig in the hammering of sleeves or plugs of at least two kinds of fasteners having different hammering length, that is, two kinds of fasteners of different sizes. As a result, it becomes possible to decrease the tool control manhour and to improve the flexibility of the jig.

### Brief Description of Drawings

Fig. 1 is a view showing a preferred first embodiment of a fastener according to the present invention and an exploded view showing a sleeve and a plug which are shown by a half cross section view.
Fig. 2 is a cross-sectional explanatory view showing a connected condition between the sleeve and the plug shown in Fig. 1.
Fig. 3 is a bottom view of Fig. 2.
Fig. 4 is an essential enlarged view of an upper end portion of Fig. 2.
Fig. 5 is an essential enlarged view of a lower end portion of Fig. 2.
Fig. 6 is an explanatory view for a hammering procedure of the fastener shown in Fig. 2.
Fig. 7 is an explanatory view for a hammering procedure of the fastener shown in Fig. 2.
Fig. 8 is a cross-sectional explanatory view of a hammering jig employed in the hammering procedure of the fastener shown in Fig. 2.
Fig. 9 is a plan explanatory view of Fig. 8.
Fig. 10 is a cross-sectional explanatory view along the line a-a of Fig. 8.
Fig. 11 is an operation explanatory view of the jig shown in Fig. 8.
Fig. 12 is a cross-sectional explanatory view along the line b-b of Fig. 11.
Fig. 13 is an operation explanatory view showing actual operation usage of the jig shown in Figs. 8 to 12.
Fig. 14 is an operation explanatory view showing actual operation usage of the jig shown in Figs. 8 to 12.
Fig. 15 is a view showing a preferred second embodiment of the fastener according to the present invention and an exploded view showing a sleeve and an anchor main body portion which are shown by a semi-cross section view.
Fig. 16 is a cross-sectional explanatory view showing a connected condition between the sleeve and the anchor main body portion shown in Fig. 15.
Fig. 17 is an explanatory view of a jig employed in the hammering of the fastener shown in Fig. 16.
Fig. 18 is a cross-sectional explanatory view showing a hammered condition of the fastener shown in Fig. 16.
Fig. 19 is a half cross-sectional explanatory view showing a modification of the fastener shown in Figs. 15 and 16.
Fig. 20 is a view showing a preferred third embodiment of the fastener according to the present invention and a cross-sectional explanatory view showing a condition in the way of hammering.
Fig. 21 is a cross-sectional explanatory view showing a completed condition of the hammering of the fastener shown in Fig. 20.
Fig. 22 is an explanatory view showing a preferred fourth embodiment of the fastener according to the present invention.
Fig. 23 is a plan explanatory view of Fig. 22.
Fig. 24 is a bottom view of Fig. 22.
Fig. 25 is an enlarged cross-sectional view of an essential part of Fig. 22.
Fig. 26 is a half cross-sectional explanatory view showing a hammering condition of the fastener show in Fig. 22.
Fig. 27 is a half cross-sectional explanatory view showing a hammering condition of the fastener show in Fig. 22.
Fig. 28 is a structure explanatory view showing a modification of the fastener shown in Fig. 22.
Fig. 29 is an explanatory view showing a further another modification of the fastener shown in Fig. 22.
Fig. 30 is a plan explanatory view of Fig. 29.
Fig. 31 is a bottom view of Fig. 29.
Fig. 32 is a cross-sectional explanatory view of the fastener shown in Fig. 29.
Fig. 33 is a half cross-sectional explanatory view showing the hammering condition of the fastener show in Fig. 29.
Fig. 34 is an explanatory view showing a preferred fifth embodiment of the fastener according to the present invention.
Fig. 35 is a cross-sectional explanatory view of the hammering condition of the fastener shown in Fig. 34.
Fig. 36 is a cross-sectional explanatory view at the hammering completed time of the fastener shown in Fig. 34.

### Best Mode for Carrying Out the Invention

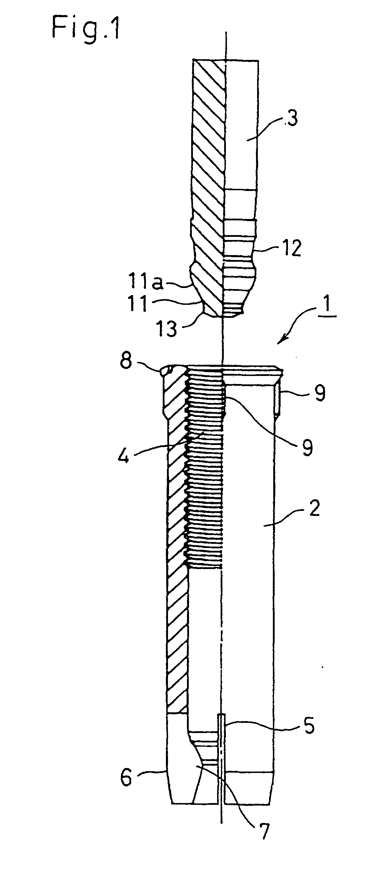

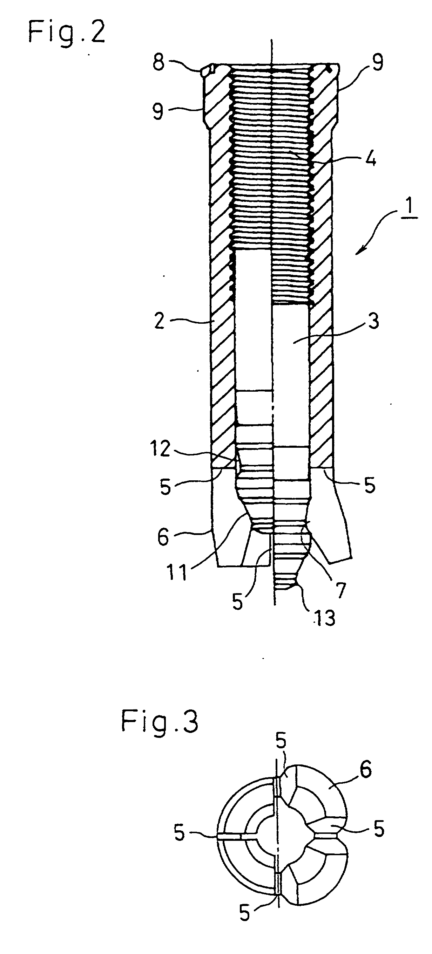

Figs. 1 to 7 are views showing a preferred embodiment (first embodiment) of a fastener according to the present invention described in claims 1 to 3 and 6, and show an example called as a metal post-installation anchor of an inner cone hammering type. In Figs. 2 to 5, a left half portion shows a non-expanded condition of an expansion portion, and a right half portion shows an expanded condition.

As shown in Fig. 1 to 3, a fastener 1 is constituted by a hollow cylindrical shaped sleeve 2 and a stepped shaft shaped plug 3 press-fitted into the sleeve 2 as an expanding element.

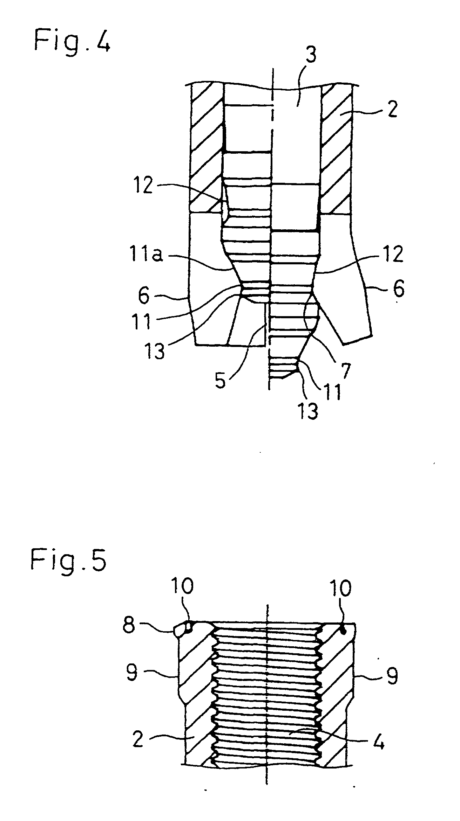

A female screw portion 4 is formed on an inner periphery of an upper end portion of the sleeve 2, ranging in about half of the longitudinal dimension of the sleeve 2. Further, a lower end portion of the sleeve 2 is divided into a collet shape having four radially slotted grooves 5 and is formed into an expansion portion 6 expandable in a radial direction. As enlargedly shown in Fig. 4, a projecting portion 7 is provided at an inner peripheral surface of the expansion portion 6 so as to partially decrease a inner diameter thereof.

As enlargedly shown in Fig. 5, a flange portion 8 is provided at an outer periphery of an upper end portion at the female screw portion 4 of the sleeve 2 with a small protrusion. Further, a plurality of ribs 9 are projectedly provided so as to extend from the flange portion 8 to a general outer peripheral surface of the sleeve 2. Since the flange portion 8 and the ribs 9 are positively press-fitted to an opening edge portion of the prepared hole as mentioned later, a circumferential groove 10 is provided at an inner periphery of the flange portion 8 from the upper end surface thereof as a small annular groove so that the flange portion 8 has a property of easily deforming in the diametrical direction.

On the other hand, the longitudinal dimension of the plug 3 is set at about half of the longitudinal dimension of the sleeve 2, and a recess groove 11 including a taper surface 11a and a recess groove 12 acting as a neck portion and slightly greater than the recess groove 11 are provided at a tip end portion of the plug 3. The recess groove 11 is shaped into a form fitted with the projecting portion 7 formed on the inner periphery of the expansion portion 6 put in the non-expanded condition, and the other groove 12 is shaped into a form fitted with a shape of the projecting portion 7 on the inner periphery of the expansion portion 6 put in the expanded condition. Further, the maximum diameter of a tip end projection 13 of the plug 3 is formed so as to be slightly larger than the minimum inner diameter at a top portion of the projection portion 7 on the inner periphery of the expansion portion 6 put in the non-expanded condition.

Accordingly, by press-fitting the plug 3 into the sleeve 2 in order to assemble the sleeve 2 and the plug 3 by means of the interference fit connection, in addition that the general inner peripheral surface of the sleeve 2 and the general outer peripheral surface of the plug 3 are put in the interference fit condition, the recess groove 11 of the tip end of the plug 3 and the projecting portion 7 of the expansion portion 6 are engaged with each other by means of irregularity engagement so as to perform a detach preventing effect due to the relative positioning. Therefore, even if the fastener 1 in the pre-installation condition is put alone, the sleeve 2 and the plug 3 are not separated from each other.

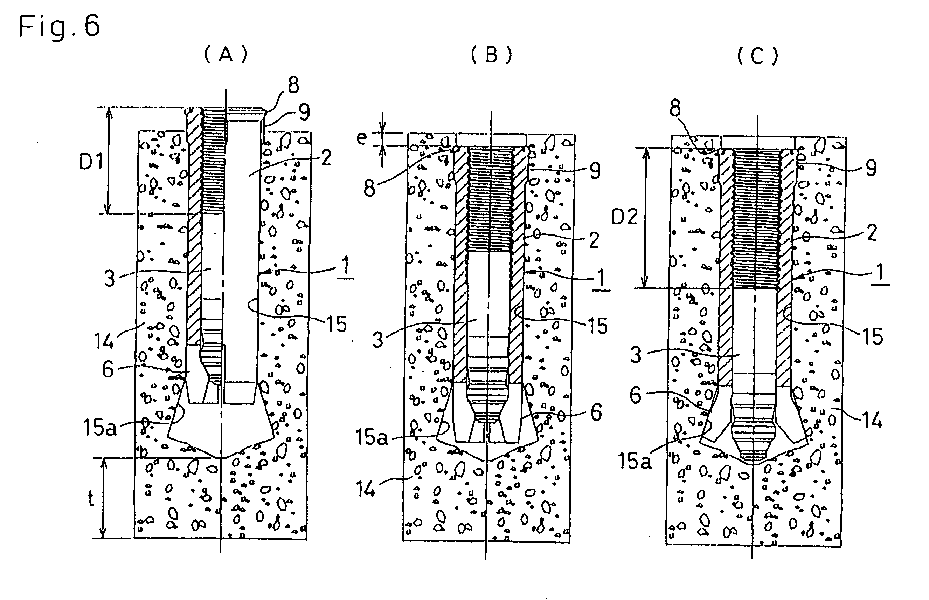

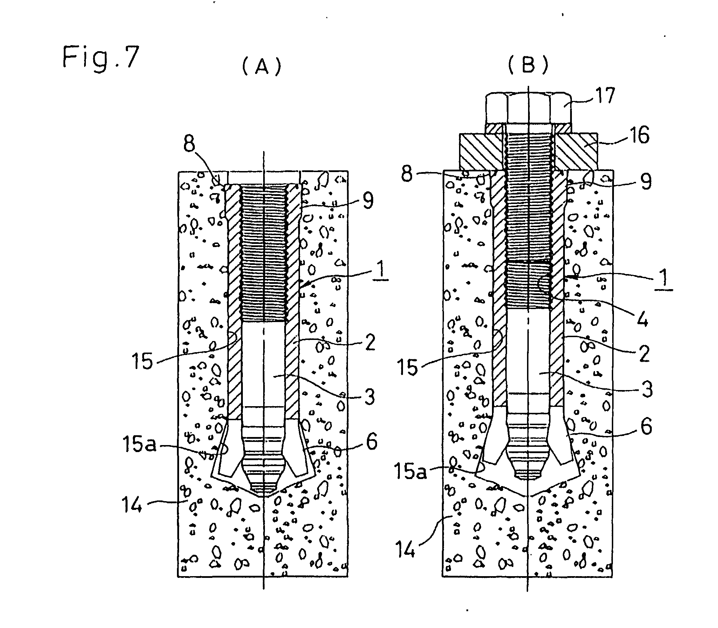

Next, the installation procedure of the fastener 1 will be explained as to a case that a prepared hole of an undercut type is also formed, with reference to Figs. 6 and 7. In this example, it is assumed that a thickness dimension t remained at a bottom wall is small and that the bottom wall can not receive the hammering force of the fastener if an undercut type hole 15 is formed in a concrete structure 14 shown in Fig. 6. Further, it is arranged such that the friction resistance between the outer peripheral surface of the sleeve 2 and the inner peripheral surface of the prepared hole 15 receives the fastener hammering force.

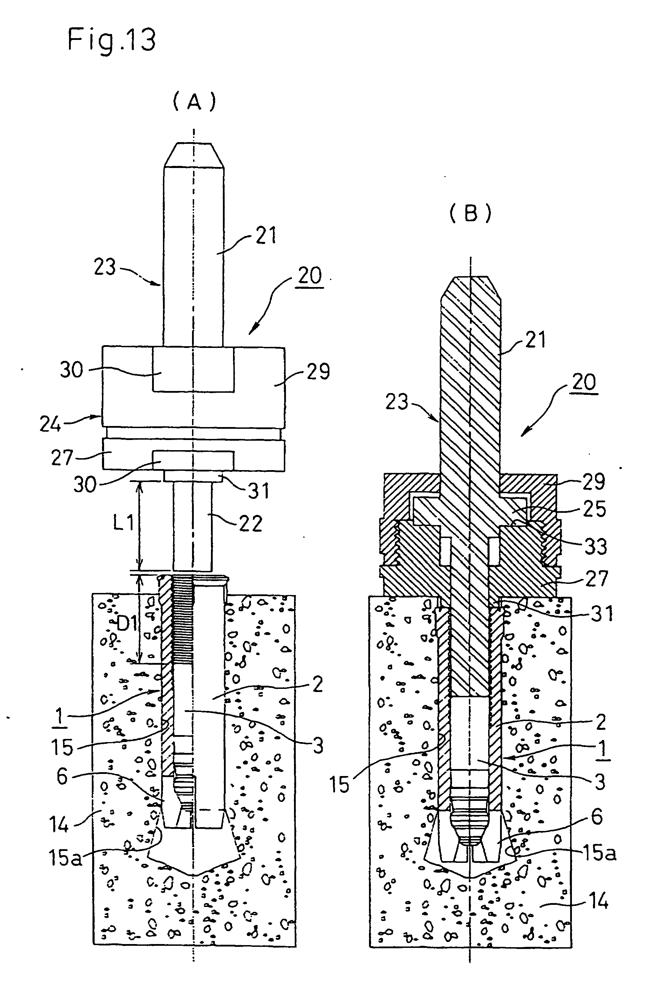

First, after the fastener 1 is inserted into the prepared hole 15 as shown in Fig. 6(A), the sleeve 23 is hammered by hammering operation through a dedicate hammering shaft (hammering jig) shown in Fig. 13 (the hammering jig 22 will be discussed later). At this time, the fastener 1 is hammered until the upper end portion of the sleeve 2 becomes lower in height level than the upper wall surface of the concrete structure 14 by a predetermined quantity e as shown in Fig. 6(B) so that the flange portion 8 and the ribs 9 located at the upper end portion of the sleeve 2 are completely press-fitted. Since the flange portion 8 is arranged to perform an easily deformable property by previously providing the circumferential groove 10 (Refer to Fig. 2 and 5. In these Figures, the left half portion shows a condition that the flange portion is not yet deformed, and the right half portion shows a condition that the flange portion 8 has been deformed.), during the hammered process of the sleeve 2, the flange portion 8 is press-fitted to the prepared hole 15 while being deformed in the diametrical direction. With this manner, even if a portion near the upper end periphery of the prepared hole 15 is not a complete round, the flange portion 8 is deformed so as to follow the shape of the prepared hole 15 and equivalently fitted with the inner peripheral surface of the prepared hole 15. Therefore, it becomes possible to prevent any clearance from being generated between the prepared hole 15 and the sleeve after the installation operation and to prevent rain water and the like from infringing into a clearance therebetween.

Herein, if the prepared hole 15 is finished so that the depth of the prepared hole 15 corresponds to a specific dimension, by controlling the hammering degree of the sleeve 2 so that the above-described dimension e is set at the specific dimension, the tip end of the sleeve 2 does not reach the bottom wall surface of the prepared hole 15.

After the sleeve 2 is hammered by a specific quantity, the tip end of the expansion portion 6 of the sleeve 2 is expanded by hammering the plug 3 by means of the hammering jig 20 similar to that mentioned above as shown in Fig. 6(C) (the hammering jig 20 will be discussed later). At this time, although the sleeve 2 also tends to be hammered due to the friction force generated between the plug 3 and the sleeve 2 according to the hammering of the plug 3, as mentioned above, the flange portion 8 is engaged with the concrete structure 14 in addition that the general outer peripheral surface is fitted with the inner peripheral surface of the prepared hole 15. Therefore, the friction force between the inner peripheral surface of the prepared hole 15 and the sleeve 2 can sufficiently oppose the hammering force of the plug 3, and only the plug 3 is hammered with respect to the sleeve 2.

During a process that the plug 3 is hammered, the convexoconcave engagement between the recess groove 11 of the plug 3 and the projecting portion 7 of the expansion portion 6 is gradually disengaged as shown in Fig. 4, and according to this gradual disengagement, the expansion portion 6 is expanded into a skirt shape along a tapered surface 15a of the prepared hole 15. Then, the other recess groove 12 of the plug 3 is engaged with the projection portion 7 and therefore the relative positioning between the sleeve 2 and the plug 3 is executed. Therefore, the expansion of the expansion portion 6 is completed by reaching this condition. By the engagement between the recess groove 12 and the projecting portion 7, the expansion portion 6 once expanded to the maximum expanded state as shown in Fig. 6(C) is slightly returned due to a so-called spring back phenomenon and is put in the condition shown in Fig. 7(A). Therefore, a builder can momentarily feel that the recess groove 12 is engaged with the projecting portion 7 as an installation feeling, and the hammering operation of the plug 3 is terminated by obtaining the installation feeling regarded that the expansion portion 6 was expanded by the predetermined quantity. If the depth dimension of the prepared hole 15 corresponds to the specific dimension, the tip end of the plug 3 is not contacted with the bottom wall surface of the prepared hole 15 under the expanded condition of the expansion portion 6.

If the expansion of the expansion portion 6 is completed by the hammering of the plug 3, a predetermined fixing structure 16 is set on the concrete structure 15 as shown in Fig. 7(B), and a bolt 17 passing through the fixing structure 16 is screwed to the female screw portion 4 of the sleeve 2 to be fixed with the concrete structure 15. At this time, since the plurality of ribs 9 formed on the outer peripheral surface of the sleeve 3 are engaged with the concrete structure 14 as explained above, this arrangement prevents the sleeve 2 from being rotated together with the bolt 17. According to the tightening of the bolt 17, the sleeve 2 is relatively pulled up and therefore the upper end surface of the sleeve 23 is fitted with the fixing structure 16. Further, the expansion portion 6 previously expanded is fitted with the taper surface 15a of the prepared hole 15. As a result, the expansion portion 6 expanded into a skirt shape and the fixing structure 16 press-fittingly tighten the concrete structure 14. Therefore, it becomes possible to strongly fix the fixing structure 16 with a further strong anchor effect.

With the thus arranged embodiment, when the fastener 1 is put alone in the non-expanded condition, the sleeve 2 and the plug 3 are engaged with each other by the convexoconvave engagement so as to be relatively positioned with each other, in addition to the press-fitting of the plug 3 to the sleeve 3. Therefore, the sleeve 2 and the plug 3 are not separated and are easy to be handled. Further, even when the hammering force cannot be received at the bottom wall surface of the prepared hole 15, it is of course possible to execute the anchor hammering by receiving the hammering force in the friction force between the sleeve 2 and the inner peripheral surface of the prepared hole 15. Further, since the installation feeling caused by the convexoconcave engagement is obtained by expanding the expansion portion 6 through hammering the plug 3 to the specific position, the dispersion of the installation condition due to differences among builders is prevented, and the stable anchor effect is always ensured. Furthermore, by employing the prepared hole 15 of a so-called undercut type in addition to the fastener 1, the tensile strength is further improved.

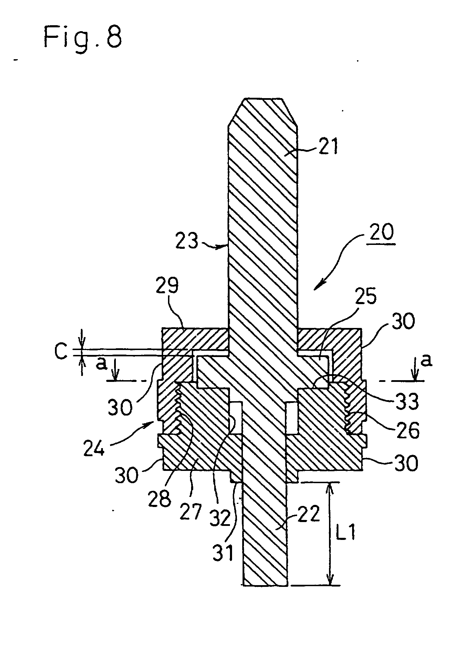

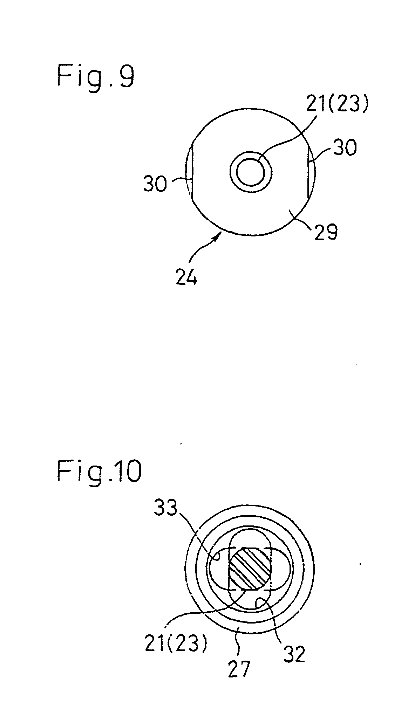

Next, the detail of the jig 20 of Fig. 13 employed in the hammering of the fastener 1, that is, a preferred embodiment of the jig according to claim 10 will be explained with reference to Figs. 8 and 9. Herein, the jig 20 is characterized to be commonly adapted to the hammering of the sleeve 2 and the hammering of the plug 3 by changing an effective longitudinal dimension of a punch portion 22 inserted to the sleeve 2.

The jig 20 is generally constituted by a rod 23 integrated so that the punch portion 22 inserted into the sleeve 2 is located on the same axis with a shank portion 21 acting as a grip portion and a hammering input portion, and an adjustable adapter 24 attached to the rod 23.

The shank portion 21 and the punch portion 22 of the rod 23 are both solid cylindrical shapes, the rod 23 is formed into a stepped shaft shape as a whole, and a flange portion (deformed flange portion) 25 of a flat oval or oval shape taking a diameter of the shank portion 21 as a miner axis is integrally formed at the shank portion 21 near the punch portion 22.

On the other hand, the adjust adapter 24 is constituted by a compress-cylindrical case 27 having a male screw portion 26 at its outer peripheral surface and a cup-shaped cover 29 having a female screw portion 28 at its inner peripheral surface. The case 27 is attached to the rod 23 from the punch portion 22, and the cover 29 is attached to the rod 23 from the shank portion 21. Then, both of the case 27 and the cover 29 sandwich the flange portion 25 and are detachably connected with each other through screw portions 26 and 28 thereof. Width across flat portions 30 for tightening and loosening the screw portions 26 and 28 are formed on outer peripheral surfaces of the case 27 and the cover 29. Further, an annular projection 31, which is seated on the sleeve 2 when the sleeve 2 or the plug 3 is hammered, is formed at a lower surface of the case 27.

Different two engagement grooves 32 and 33, which the flange portion 25 is engageble with and detachable from, are formed at an upper surface of the case 27 so as to cross with each other in a plan view direction. More specifically, the first engagement groove 32 having the same shape with the flange portion 25 and a deeper depth and the second engagement groove 33 having the same shape with the flange portion 25 and a shallow depth are provided at the case 27 so that they are sifted by 90° in phase with each other so as to form a cross shape. By rightly rotating or inversely rotating the rod 23 and the adjust adapter 24, one of the two engagement grooves 32 and 33 is selectively engaged with the flange portion 25.

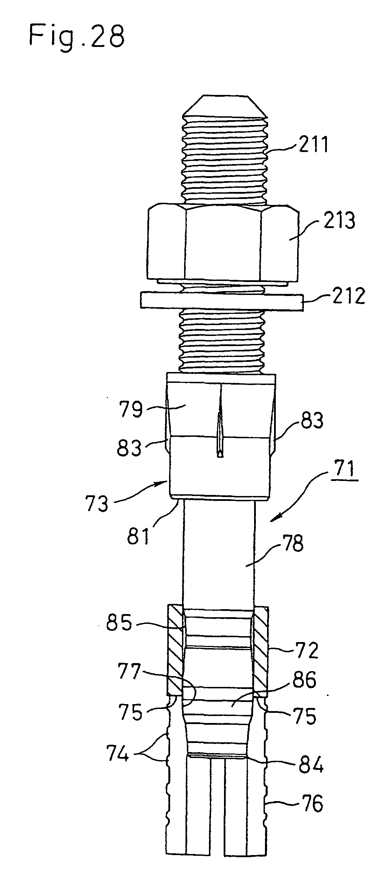

That is, as shown in Fig. 28, when the flange portion 25 is engaged with the shallow depth second engagement groove 33, a distance L1 from the annular projection 31 to the tip end of the punch portion 22 is adjusted to the distance D1 from the upper end surface of the sleeve 2 of the non-expanded fastener 1 shown in Fig. 6(A) to the upper end surface of the plug 3. In this case, a clearance C necessary for releasing the engagement between the second engagement groove 33 and the flange portion 25 is ensured between the flange portion 25 engaged with the second engagement groove 33 and the cover 29. Accordingly, by using the jig 20 set at the condition shown in Fig. 8, the sleeve 2 can be hammered.

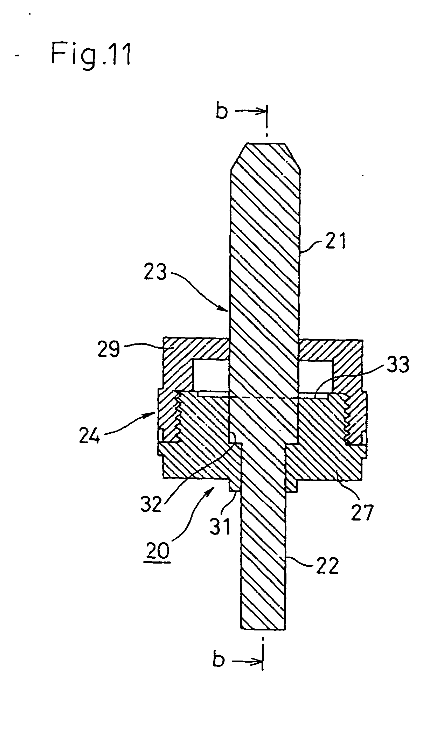

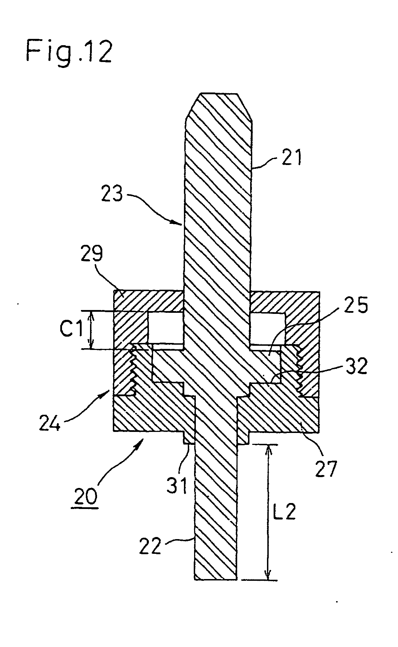

As shown in Figs. 11 and 12, when the flange portion 25 is engaged with the first engagement groove 32 having a deep depth, the distance between the annular projection 31 to the tip end portion of the punch portion 22 is set to correspond with the distance L2 (L1<L2) from the upper end surface of the sleeve 2 of the fastener 1 expanded as shown in Fig. 6(A) to the upper end surface of the plug 3. In this case, a clearance C1 necessary for releasing the engagement between the first engagement groove 32 and the flange portion 25 is ensured between the flange portion 25 engaged with the first engagement groove 32 and the cover 29. Accordingly, by using the jig 20 set at the condition shown in Figs. 11 and 12, the plug 3 can be hammered with respect to the sleeve 2.

Accordingly, when the sleeve 2 is hammered, the flange portion 25 of the jig 20 is engaged with the second engagement groove 33 having the small depth as shown in Fig. 8, and the punch portion 22 is inserted into the sleeve 2 preliminarily set in the prepared hole 15 until the annular projection 31 contacts with the upper end surface of the sleeve 2, as shown in Figs. 13(A) and 13(B). Under this condition, the sleeve 2 is hammered until the case 27 is seated on the concrete structure 14 by applying the hammering strike to the shank portion 21. Since the hammered depth of the sleeve 2 can be controlled by monitoring the seated condition of the case 27, the hammered depth of the sleeve 2 is always maintained at a constant value.

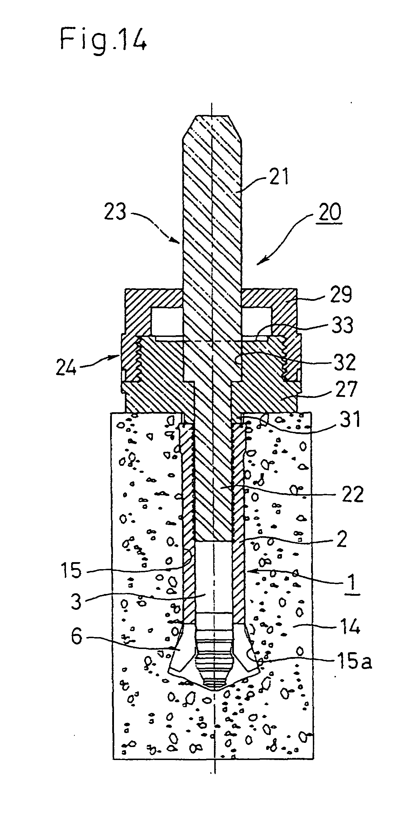

When the plug 3 is hammered following to the hammering of the sleeve 2, the rod 23 is lifted up with respect to the adjust adapter 24 by the clearance C from the condition of Figs. 8 and 13(B), the engagement between the second engagement groove 33 and the flange portion 25 are released, and the flange portion 25 is slightly engaged with the first engagement groove 32 having the deep depth by relatively rotating between the adjust adapter 24 and the rod 23 by 90° (At this time, since the plug 3 is not yet hammered, the flange portion 25 is not put in the fully hammered condition with respect to the first engagement groove 21). After it is recognized that the case 27 is seated on the concrete structure 14, the hammering strike is applied to the shank portion 21 while the engaged condition between the first engagement groove 32 and the flange portion 25 is maintained. Until the flange portion 25 is put in the fully hammered condition with respect to the first engagement groove 32, that is, until the condition shown in Fig. 14, the plug 3 is hammered. In this case, on the basis of the condition that the case 27 is seated to the concrete structure 14 and the flange portion 25 is fully hammered to the first engagement groove 32, the control of the hammering depth of the plug 3 can be executed. Therefore, the hammering depth of the plug 3 and the expanded condition of the expansion portion 6 is always set constant, and the installation condition is further stabilized.

The jig 20 of the embodiment has been shown so as to be commonly employed in the hammering of the sleeve 2 and the hammering of the plug 3, herein. However, since it is possible to properly set the difference of the projection dimensions of the punch portion 22 based on the difference between the depth dimensions of the first and second engagement grooves 32 and 33, it is possible, for example, that as to two kinds of fasteners having different sizes, different sleeves 2 having two kinds of D1 dimensions (refer to Fig. 6 (A)) may be commonly employed for the hammering or different plugs 3 having two kinds of D2 dimensions (refer to Fig. 6 (C)) may be employed for the hammering.

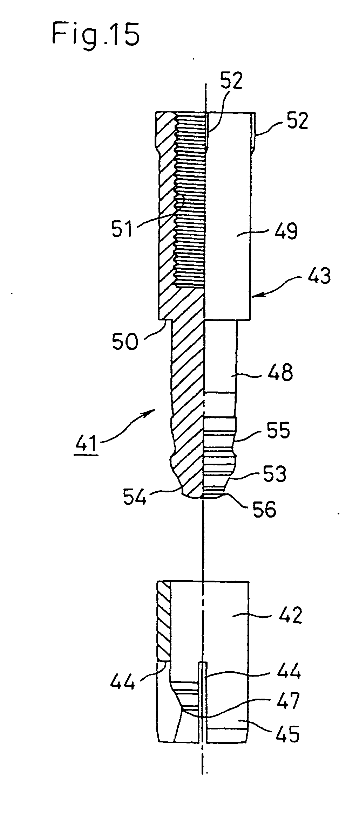

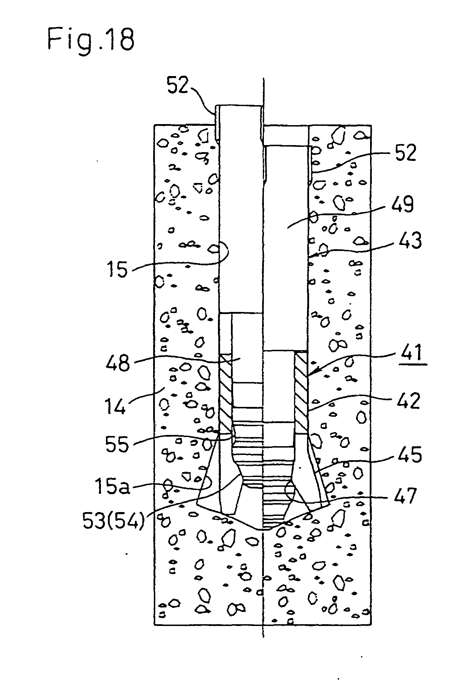

Figs. 15 to 18 are figures showing the preferred embodiment (second embodiment) of the fastener according to the present invention described in claims 1 and 5 to 7, and show an example of a metal post-installation anchor and of a sleeve hammering type. In Fig. 18, the left half portion thereof shows a non-expanded condition of the expansion portion, and the right half portion thereof shows the expanded condition of the expansion portion.

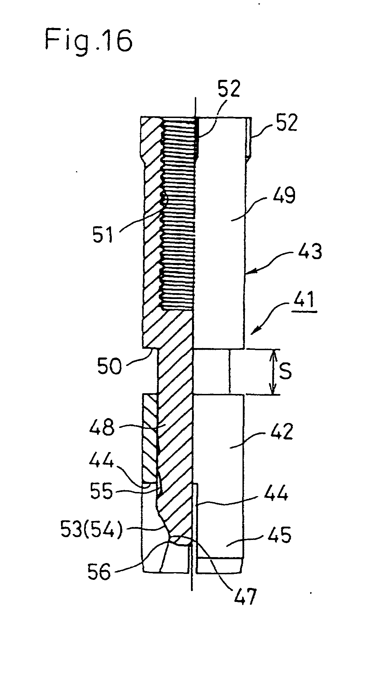

As shown in Fig. 15 and 16, a fastener 41 is constituted by a sleeve 42 of a hollow cylindrical shape and an anchor main body 43 of the stepped shaft shape, which is press-fitted into the sleeve 42.

The sleeve 42 is formed into a shape having a minimum longitudinal dimension which is minimum and necessary as an expansion portion. Further, a lower end portion of the sleeve 42 is divided into a collet shape having four radially slotted grooves 44 and is formed into an expansion portion 45 expandable in a radial direction. Furthermore, a projecting portion 47 is provided at an inner peripheral surface of the expansion portion 45 so as to partially decrease an inner diameter thereof.

On the other hand, the anchor main body portion 43 is constituted by a plug 48 directly press-fitted into the sleeve 42 as an expansion member and a large diameter shaft portion 49 integral with and extending from the plug 48. Further, a stepped portion 50 is provided between the plug 48 and the larger diameter shaft portion 49 corresponding to the difference of the diameters therebetween. The diameter of the large diameter shaft portion 49 is set to be generally the same as that of the sleeve 42, and a female screw portion 51 is formed on the inner periphery of the larger diameter shaft portion 49. Further, a plurality of ribs 52 are projectingly provided on an outer peripheral surface of the end portion at which the female screw portion 51 of the large diameter shaft portion 49 is opened. The ribs 52 have a function for preventing the anchor main body portion 43 from being rotated when a bolt is screwed to the female screw portion 51 as mentioned later.

The plug 48 integrally formed with the large diameter shaft portion 49 is set to have a longitudinal dimension slightly longer than the sleeve 42. Further, the plug 48 is provided with a recess groove 54 which includes a taper surface 53 at the tip end portion of the plug 48 and a recess groove 55 which is slightly larger in diameter than the recess groove 54 and act as a neck portion. By these portions, the plug 48 is formed into a limbless wooden doll shape or stepped shaft shape. The recess groove 54 is formed into a shape corresponding to the projecting portion 47 at the inner periphery of the expansion portion 45 in the non-expanded condition, and the other recess groove 55 is formed into a shape corresponding to the projection portion 47 at the inner periphery of the expansion portion 45 in the expanded condition. Further, the diameter of the projecting portion 56 at the tip end of the plug 48 is formed slightly greater than the minimum inner diameter at the top portion of the projecting portion 47 at the inner periphery of the expansion portion 45 in the non-expanded condition. As to the relative relationship between the expansion portion 45 of the sleeve 42 and the plug 48, the structure thereof is the same as that explained in the first embodiment.

By press-fitting the plug 48 into the sleeve 42 in order to connect the sleeve 42 and the plug 48 at the anchor main body portion 43 by means of the interference fit connection, in addition that the general inner peripheral surface of the sleeve 42 and the general outer peripheral surface of the plug 48 are put in the interference fitting condition, the recess groove 54 of the tip end of the plug 48 and the projecting portion 47 of the expansion portion 45 are engaged with each other by means of the covexoconcave engagement so as to perform a detach preventing effect due to the relative positioning. Therefore, even if the fastener 41 in the pre-installation condition is put alone, the sleeve 42 and the plug 48 are not separated from each other. Simultaneously, a relative movement stroke S allowed between the sleeve 42 and the steppe portion 50 of the anchor main body portion 43 is set therebetween.

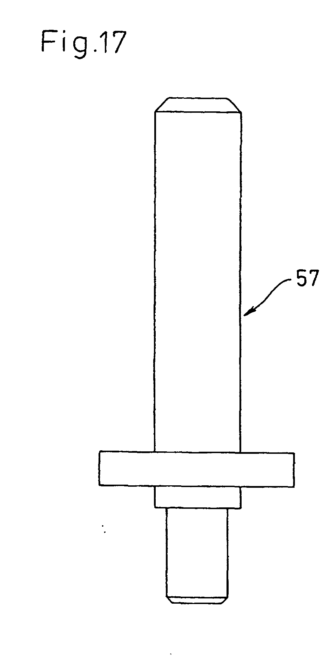

Next, the installation procedure of the fastener 41 will be explained as to a case that a prepared hole 15 of an undercut type is also formed, with reference to Figs. 17 and 18.

This example shows a case that the sleeve 42 is seated to a bottom wall surface of the prepared hole 15 of the undercut type which is formed in a concrete structure 14 and that the plug hammering force is received by the bottom wall surface.

After the fastener 41 is inserted into the prepared hole 15 from the side of the sleeve 42 as shown in Fig. 18, and the tip end of the sleeve 42 is seated to the bottom wall portion of the prepared hole 15 by weakly applying the hammering strike to the large diameter shaft portion 49 of the anchor main body portion 43 through a hammering shaft (hammering jig) 57 shown in Fig. 17. Further, a hammer main strike is applied to the anchor main body portion 43 to expand the expansion portion 45 of the sleeve 42. Furthermore, the anchor main body portion 43 is hammered until the upper end surface of the large diameter shaft portion 49 becomes slightly lower in height level than the upper wall surface of the concrete structure 14 by a predetermined quantity, so that the ribs 52 at the end portion of the large diameter shaft portion 49 are completely press-fitted into the prepared hole 15 (a condition of the right half portion of Fig. 18).

During the process that the anchor main body portion 43 is hammered, the convexoconcave engagement between the recess groove 54 of the plug 48 and the projecting portion 47 of the expansion portion 45 is gradually disengaged, and according to this gradual disengagement, the expansion portion 45 is expanded into a skirt shape along the taper surface 15a of the prepared hole 15. Then, the sleeve 42 is contacted with the stepped portion 50 of the anchor main body portion 43 so as not to be moved with each other. Simultaneously, the other recess groove 55 of the plug 48 is engaged with the projection portion 47 and therefore the relative positioning between the sleeve 42 and the plug 48 is executed. Therefore, the expansion of the expansion portion 45 is completed by this condition. By the engagement between the recess groove 55 and the projecting portion 47, as is similar to the case of Figs. 6 and 7, the expansion portion 45 once expanded to the maximum expanded state is slightly returned due to a so-called spring back phenomenon and is put in the condition of the right half portion of Fig. 18. Therefore, a builder can momentarily feel that the recess groove 55 is engaged with the projecting portion 47 as an installation feeling, and the hammering operation of the plug 48 is terminated by obtaining the installation feeling regarded that the expansion portion 45 was expanded by the predetermined quantity. These behaviors are the same as those of the first embodiment previously explained.

During the expansion of the expansion portion 45 is completed by the hammering of the plug 48, a predetermined fixing structure is set to the concrete structure 14, and a bolt inserted to the fixing structure is tightened to the female screw portion 51 of the large diameter shaft portion 49, in the same procedure as that shown in Fig. 7.

In addition to the advantages as same as those of the first embodiment, this embodiment has a merit that the sleeve 42 may be extremely small in longitudinal dimension. That is, the sleeve 42 of the present embodiment may substantially have a function as the expansion portion 45 and therefore may be small. If a sleeve is long, it is necessary to produce the sleeve by means of the follow roll forming. In contrast to this, since the sleeve 42 is short, it is possible to easily produce it by means of the forging press method, and therefore it is possible to decrease the cost of the part.

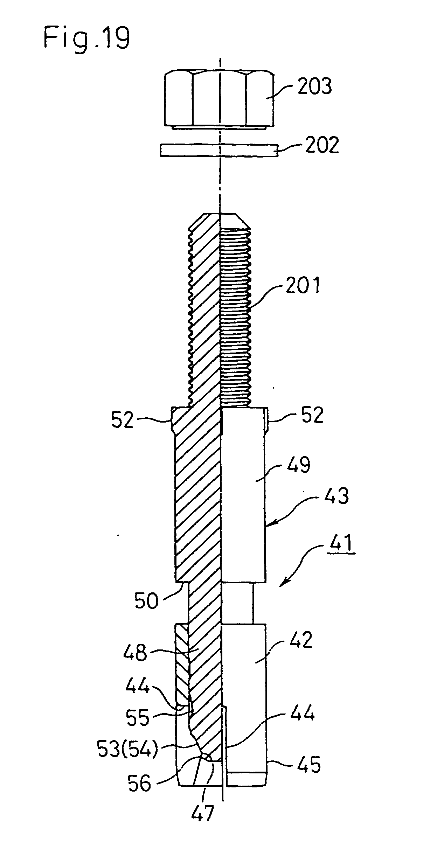

Fig. 19 is a modification of the fastener 41 shown in Figs. 15 to 18. In this modification, a male screw portion 201 instead of the female screw portion 51 of the anchor main body portion 43 is integrally formed with the anchor main body portion 43. The other structure is the same as that shown in Figs. 15 to 18. A nut 203 is screwed to the male screw portion 201 through a washer 202. This modification performs the functions as same as that shown in Figs. 15 to 18 does.

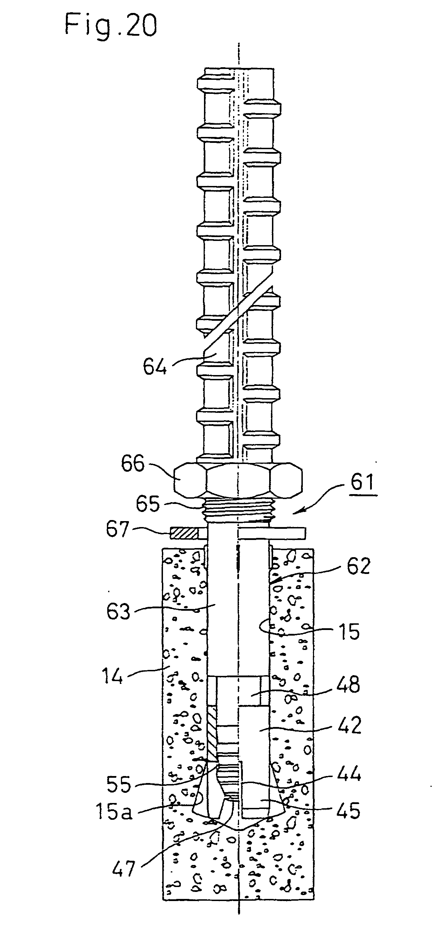

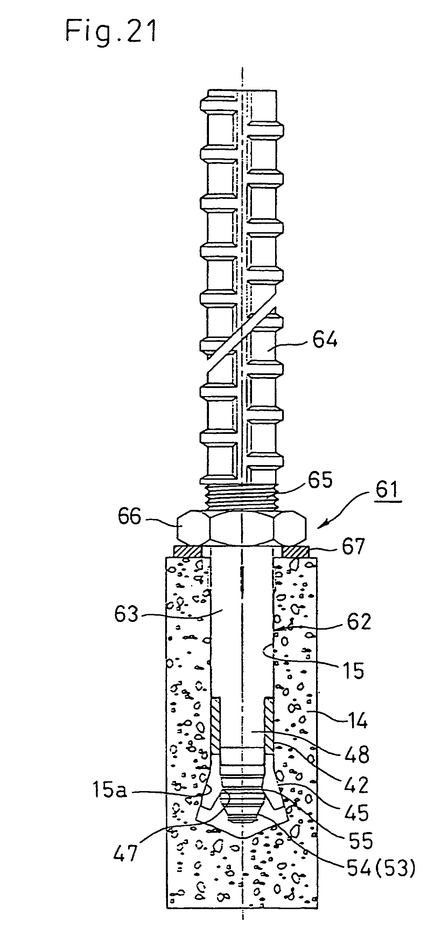

Figs. 20 and 21 shows a preferred embodiment (third embodiment) of a fastener 61 according to the invention claimed in claims 1, 5, 6 and 8, and shows an example of a so-called metal installation anchor and of the sleeve hammering type. Herein, parts common with those of the second embodiment shown in Figs. 15 to 18 are denoted by the same reference numerals.

As shown in Figs. 20 and 21, a deformed reinforcing bar 64 for reinforce concrete is integrally formed with the large diameter shaft portion 63 of the anchor main body portion 62 instead of the female screw portion 51 shown in Fig. 16. A male screw portion 65 is formed at a boundary portion between the large diameter shaft portion 63 and the deformed reinforcing bar 64. A lock nut 66 is previously screwed to the male screw portion 65.

In the installation of the fastener 61 of the present embodiment, there are the procedure and the behavior from the operation that the anchor main body portion 62 is hammered by hammering strike under the condition that the sleeve 42 is seated on the bottom wall surface of the prepared hole 15 to the operation that the expansion portion 45 of the sleeve 43 is expanded as shown in Fig. 20, which procedure and behavior are the same as those of the second embodiment explained previously.

After the expansion of the expansion portion 45 is completed, the lock nut 66 previously screwed to the male screw portion 65 is tightened through the washer 67. With this operation, the fastener 61 is drawn from the prepared hole 15 by a predetermined quantity in the drawn-out direction, and finally the deformed reinforcement bar 64 of the fastener 61 is strongly fixed to the concrete structure 14 in the form of compressingly tightening the concrete structure 14 by the expansion portion 45 and the lock nut 66. The deformed reinforcement bar is, for example, used as a reinforcing bar for earthquake-resisting and reinforcing the concrete structure 14.

In this embodiment, since the fastener 61 is fixed while having an initial press tightening force due to the tightening of the lock nut 66, it performs a superior resisting force in both the expansion direction and the compression direction.

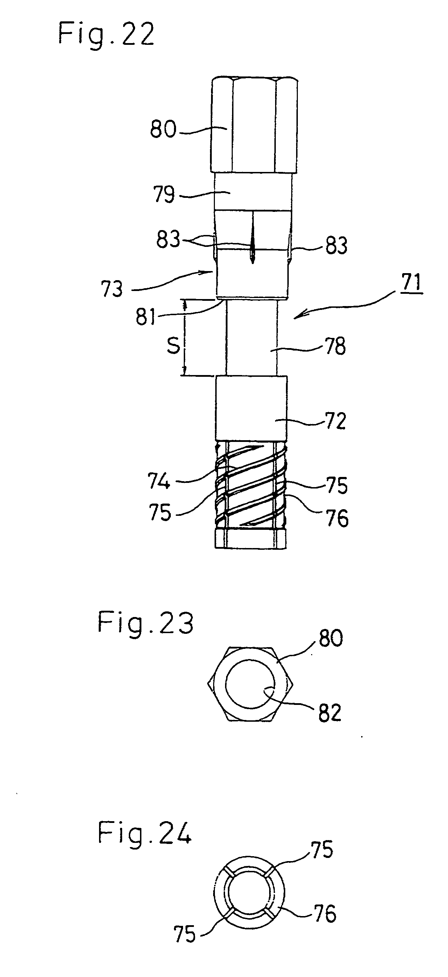

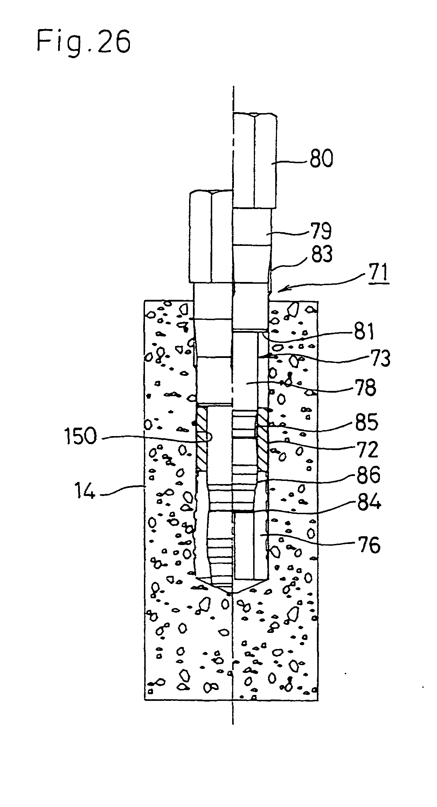

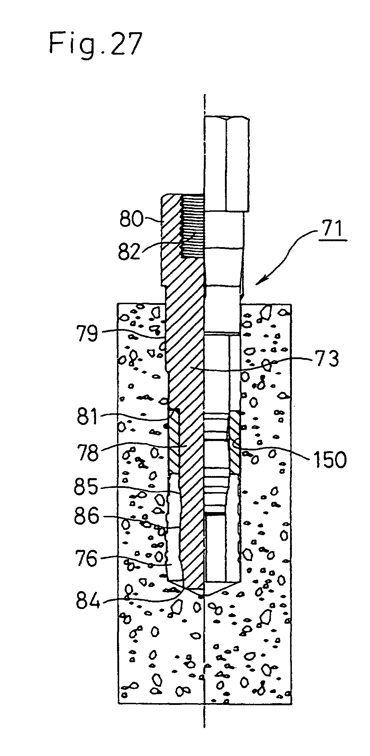

Figs. 22 to 27 shows a preferred embodiment (fourth embodiment) of the fastener according to the invention claimed in claims 1, 4 and 7, and shows an example of a so-called metal-type post-installation anchor and of the sleeve hammering type. More particularly, it shows an example employed in the installation of a hanging bolt. In Figs. 26 and 27, the right half portion shows the non-expanded condition of the expansion portion, and the left half portion shows the expanded condition of the expansion portion.

As shown in Fig. 22 to 25, a fastener 71 is constituted by a sleeve 72 of a hollow cylindrical shape and an anchor main body portion 73 of a generally stepped shaft shape, which is press-fitted into the sleeve 72.

The sleeve 72 is formed into a member having a short longitudinal dimension which is necessary and minimum as an expansion portion. A bead portion 74 of a spiral shape is formed at the outer peripheral surface of the sleeve 72. A tip end portion of the sleeve 72 is divided into a collet shape having four radially slotted grooves 75 having a longitudinal dimension which is two-third of the longitudinal dimension of the sleeve and is formed into an expansion portion 76 expandable in the radial direction. An inner peripheral surface of the expansion portion 76 is a simple cylindrical surface, and its inner diameter is set to be slightly smaller than a diameter of a general inner surface of the sleeve. Further, the inner peripheral surface of the expansion portion 76 and the general inner peripheral surface of the sleeve are smoothly continued through a step taper surface 77 constituted by taper surfaces of several steps.

On the other hand, the anchor main body portion 73 is constituted by a plug 78 directly press-fitted into the sleeve 72 as an expanding member, a large diameter shaft portion 79 integrally formed as if the plug 78 extends thereto, and a hexagonal head portion 89 integrally formed with large diameter shaft portion 79 while slightly increasing the diameter and as if the large diameter shaft portion 79 extends thereto. A stepped portion 81 corresponding to a difference between the diameters of the plug 78 and the large diameter shaft portion 79 is provided between the plug 78 and the large diameter shaft portion 79. The diameter of the large diameter shaft portion 79 is set to be generally similar to that of the sleeve 72, and a female screw portion 82 (refer to Fig. 27) is formed at the inner periphery of the head portion 80. Further, a plurality of ribs 83 are projectingly formed on the outer peripheral surface of the large diameter shaft portion 79. The ribs 83 perform a function of preventing the anchor main body portion 73 from being also followingly rotated when the bolt screwed to the female screw portion 82 is tightened as mentioned later.

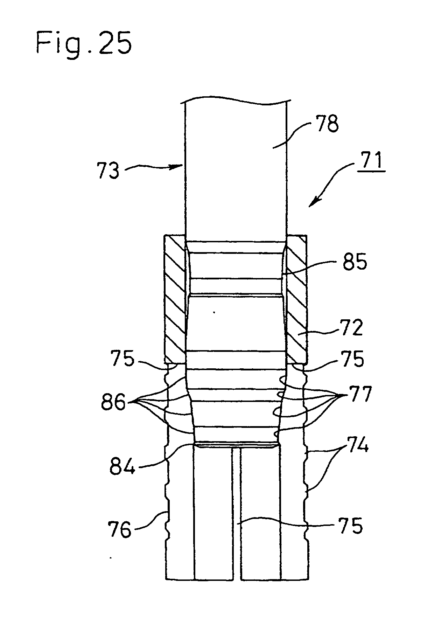

The plug 78 integrally formed with the large diameter shaft portion 78 has a longitudinal dimension slightly longer than that of the sleeve 72. As enlargedly shown in Fig. 25, a tip end projection 84, which is slightly greater than the minimum inner diameter of the expansion portion 76 of the sleeve 72, is formed at the tip end portion of the plug 78. A neck portion 85 acting as a small diameter portion is formed at a center portion of the plug 78 in the longitudinal direction. Further, a step taper shaft portion 86 of a generally barrel shape, which is constituted by taper surfaces of several steps for smoothly expanding the expansion portion 76, is formed between the tip end projection 84 and the neck portion 85. The shape of the step taper shaft portion 86 is formed into a shape corresponding to the step taper surface 77 of the inner periphery of the expansion portion in the non-expanded condition.

By press-fitting the plug 78 into the sleeve 72 in order to combine the sleeve 72 and the plug 78 of the anchor main body portion 73 by means of the interference fit connection, in addition that the general inner peripheral surface of the sleeve 72 and a part of the step taper shaft portion 86 of the plug 78 are put in the interference fit condition, the step taper shaft portion 86 and the step taper surface 77 are put in the interference fit connection condition. Further, both of them are engaged by the convexoconcave engagement after getting over the tip end projection 84. Therefore, a detach preventing effect is generated due to the relative positioning. The fastener 71 in the pre-installation condition is arranged such that the sleeve 72 and the anchor main body portion 73 are not separated from each other. Simultaneously, a relative movement stroke S allowed between the sleeve 72 and the anchor main body portion 73 is set therebetween.

Accordingly, when the thus arranged fastener 71 is hammered to a prepared hole 150 of a simple cylinder type, the fastener 71 is inserted to the prepared hole 150 until the sleeve 72 reaches the bottom wall surface of the prepared hole 150. Thereafter, a hammer strike is applied to the hexagonal head portion 80 by means of a not-shown dedicated hammering bar, or a strike is directly applied to the head portion 80 by a plastic hammer. That is, the fastener 71 is hammered until the tip end of the plug 78 at the anchor main body section 73 is seated to the bottom wall surface of the prepared hole 150, and until the ribs 83 formed at the outer periphery of the large diameter portion of the anchor main body portion 73 are engaged.

During the hammering process by the hammer strike, the convexoconcave engagement between the step taper surface 77 of the inner periphery of the expansion portion 76 and the step taper shaft portion 86 of the plug 78 is disengaged, and the expansion portion 45 is expanded by the relative movement of the sleeve 72 and the anchor main body portion 73. Then, when the tip end of the plug 78 is seated to the bottom wall surface of the prepared hole 150, the tip end of the sleeve 42 is contacted with the stepped portion 81 of the anchor main body portion 73 so as not to be moved with each other. Therefore, the hammering of the fastener 71 is completed by this condition.

Thereafter, a not-shown hanging bolt is screwed and fixed to the female screw portion 82 of the anchor main body portion 73. In this case, since the ribs 83 formed at the outer periphery of the large diameter shaft portion 79 is engaged with the concrete structure 14, even when the hanging bolt is screwed, the anchor main body portion 73 is not rotated thereby. Further, by executing the tightening operation of the hanging bolt through engaging a spanner with the hexagonal head portion 80 according to necessity, the followed rotation of the anchor main body portion 73 is firmly prevented.

Herein, the striking sound is clearly varied when the tip end of the plug 78 is seat to the bottom wall surface of the prepared hole 150 and when the end surface of the sleeve 72 contacts with the stepped portion 81. Therefore, the confirmation as to the expansion of the expansion portion 76 of the sleeve 72 during the hammering process is executed by this change of the hammering sound, and the hammering is completed thereby.

Further, at the timing that the hammering is completed by the expansion of the expansion portion 76, the step taper shaft portion 86 having a barrel shape at the plug 78 as shown in Figs. 26 and 27 is completely fitted to the inner periphery of the expanded expansion portion 76 and is substantially engaged again with each other into the convexoconcave engagement. The sleeve 72 expanded and the anchor main body portion 73 are relatively positioned, and therefore even when the force due to the earthquake or mechanical vibration is applied to the fastener, no loosening is generated therebetween.

Furthermore, by absolutely conditioning such that a so-called nominal length from the set position of the rib 83 to the head portion 80 is ensured long in some degree and that the ribs 83 are firmly engaged with the concrete structure 14, even if the depth of the prepared hole 150 is varied, that is, even if the head portion 80 of the anchor main body portion 80 is not completely seated to the concrete structure 14 and if the projection length of the head portion 80 from the concrete structure 14 is varied, there is not problem in mechanical strength (necessary strength). As a result, it becomes unnecessary to strictly control the depth dimension of the prepared hole 150.

Fig. 28 shows a modification of the fastener 71 shown in Figs. 22 to 27. In this modification, a male screw portion 211 instead of the hexagonal head portion 80 of the anchor main body portion 73 is integrally formed with the anchor main body portion 73. The other structure is the same as that shown in Figs. 22 to 27. A nut 213 is screwed to the male screw portion 211 through a washer 212. This modification performs the function as same as that of the embodiment shown in Fig. 22 to 27.

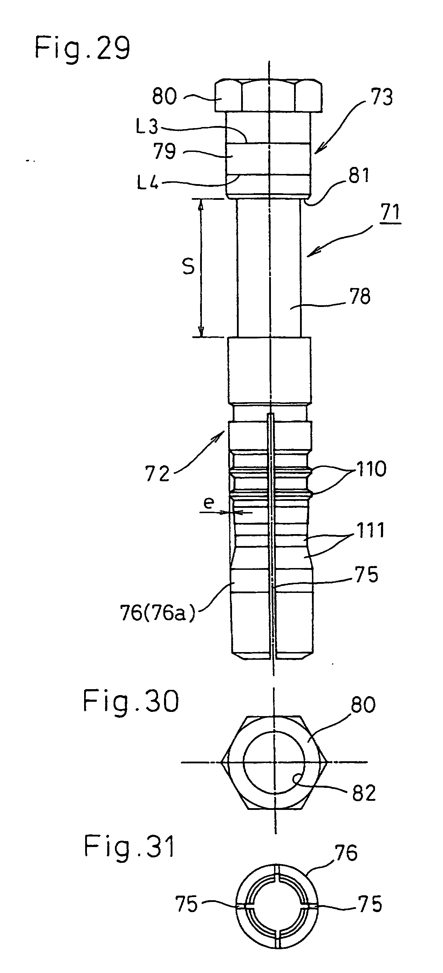

Figs. 29 to 33 shows further another modification of the fastener 71 shown in Figs. 22 to 27. In this modification, the longitudinal dimension of the sleeve 72, that is, the length of the sleeve 72 with respect to the overall length of the fastener 71 installed is set to be longer than that of the previous modification. Further, the outer diameter of the sleeve 72 is positively varied in the longitudinal direction. Parts common to those shown in Figs. 22 to 27 are denoted by same reference numerals.

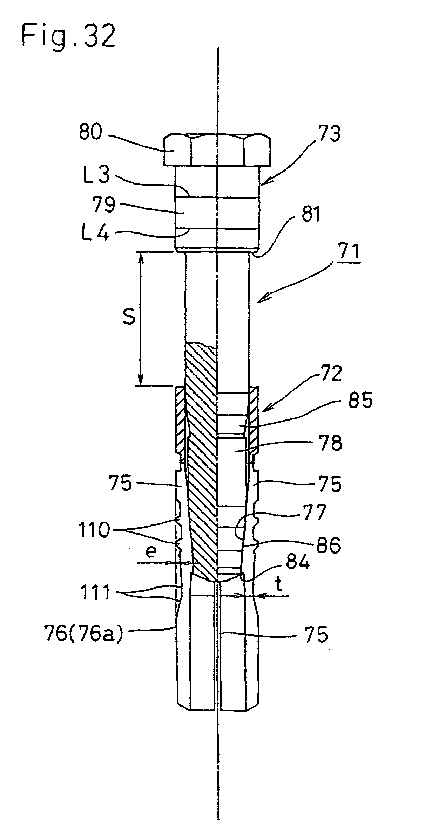

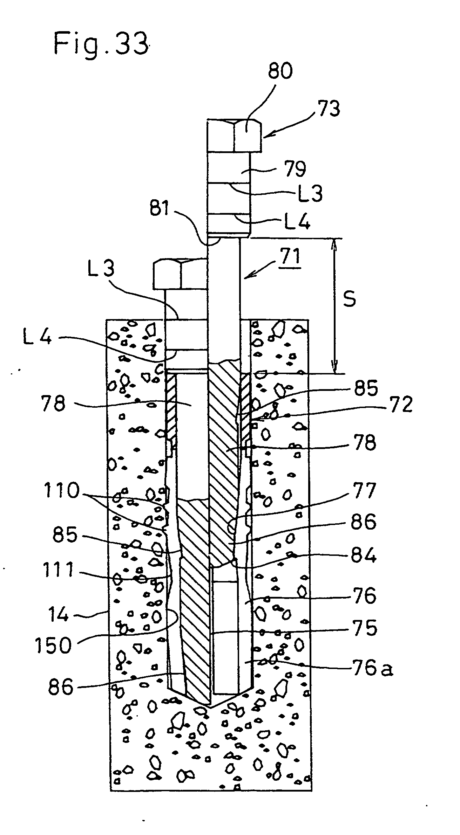

More specifically, as shown in Figs. 29 and 32, the outer diameter dimension at the longitudinal center portion of the expansion portion 76 of the sleeve 72 is positively set to be slightly smaller than the upper and lower portion thereof by a predetermined quantity e so as to be formed into a stepped shaft shape as a whole. Two annular bead portions 110 are formed at the small diameter portion, and a part lower than the bead portion 110 is continued to the a general portion 76a of the expansion portion 75 through a taper shaft portion 111. With this arrangement, the thickness dimension t becomes smallest at a part corresponding to the taper shaft portion 11 of the expansion portion 76, as is clear from Figs. 32 and 33.

Accordingly, in this modification, during the process that the expansion portion 76 is expanded according to the relative movement between the sleeve 72 seated to the bottom wall surface of the prepared hole 150 and the anchor main body portion 73 as shown in Fig. 33, when the step taper shaft portion 86 of the plug 78 is detached from the step taper surface 77 of the expansion portion 76, a part corresponding to the bead portion 111 of the expansion portion 76 is particularly largely expanded to outside and is anchored to the hole wall surface of the prepared hole 150. Simultaneously, as a reaction force thereof, a force for diametrically decreasing a part lower than the part corresponding to the bead portion 111 of the expansion portion 76 is generated.

When the step taper shaft portion 86 of the plug 78 passes through a part corresponding to the taper shaft portion 111 lower than the bead portion 110, since the part corresponding to the taper shaft portion 111 is set to become smallest in the thickness t and in the outer diameter dimension, the part corresponding to the taper shaft portion 11 is plastically deformed to the outside by the passing-through of the step taper shaft portion 86 of the plug 78, but a clearance is kept with respect to the hole wall surface of the prepared hole 150.

Thereafter, the step taper shaft portion 86 of the plug 78 is pushed into the general portion 76a located lower than the part corresponding to the taper shaft portion 111 of the expansion portion 76 after passing through the part. The general portion 76a is expanded to the outside and is engaged with the hole wall surface of the prepared hole 150. Simultaneously, as a reaction force thereof, a force for diametrically decreasing a lowest end portion of the general portion 76a is generated.

When the tip end of the plug 78 is seated at the hole bottom surface of the prepared hole 150, the end surface of the plug 78 simultaneously contacts with the stepped portion 81 of the anchor main body portion 73, and therefore the relative movement therebetween is prevented. The hammering of the fastener 1 is completed thereby. In this condition, although the whole outer peripheral surface of the expansion portion 76 is not engaged with the hole wall surface as is different from the type shown in Figs. 26 and 27, the upper and lower two portions sandwiching at least the taper shaft portion 111 are engaged with the hole wall surface with a large engagement force. Therefore, it is possible to obtain the anchor effect as same as or larger than that of the fastener shown in Figs. 26 and 27. Further, the barrel-shaped step taper shaft portion 86 of the plug 78 is completely fitted to the inner periphery of the expanded expansion portion 76 and is substantially engaged again with each other into the convexoconcave engagement. The sleeve 72 expanded and the anchor main body portion 73 are relatively positioned, and therefore even when the force due to the earthquake or mechanical vibration is applied to the fastener, no loosening is generated therebetween.

In this modification, since there are not provided the ribs 83 shown in Figs. 26 and 27, upper and lower scales L1 and L2 are previously marked on the large diameter shaft portion 79 of the anchor main body portion 73 instead of the provision of the ribs so that it is possible to control the hammered depth of the anchor main body portion 73 within the tolerance through the visual observation.

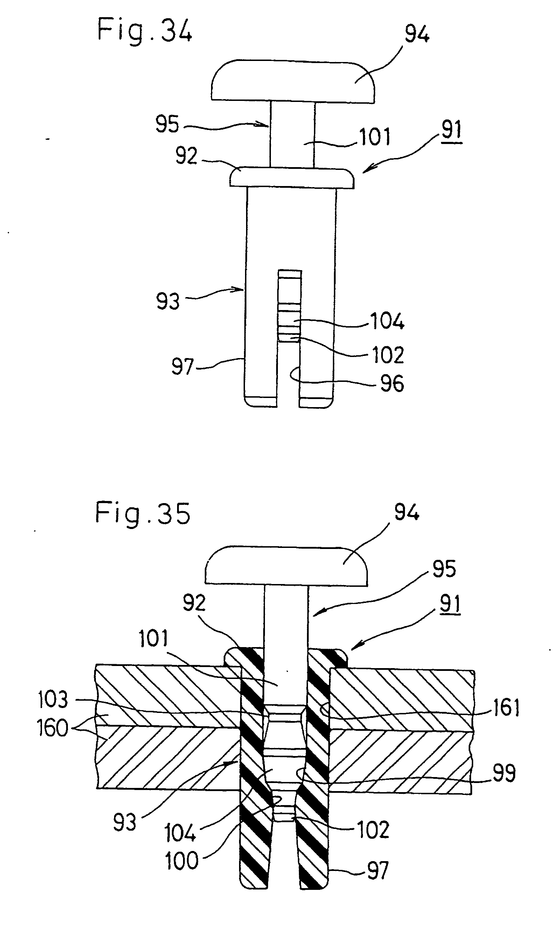

Figs. 34 to 36 shows a preferred embodiment (fifth embodiment) of the fastener according to the invention claimed in claims 1 and 9, and shows a so-called resin-type post-installation anchor or resin rivet.

As shown in Figs. 34 and 35, a fastener 91 is constituted by a hollow cylindrical sleeve 93 having a circular head portion 92 and a stepped shaft shape or fungiform plug 95, which has a head portion 94 and is press-fitted into the sleeve 93. Both are made of thermoplastic resin such as nylon.

A tip end portion of the sleeve 93 is divided into a collet shape having four radially slotted grooves 75 having a longitudinal dimension which is a half of the longitudinal dimension of the sleeve and is formed into an expansion portion 97 expandable in the radial direction. In contrast that the general inner peripheral surface of the sleeve 93 is a simple cylindrical surface, an inner peripheral surface of the expansion portion 97 has a step taper surface 99 which is continuous to a general inner peripheral surface and is gradually decreased in diameter toward the tip end. Further, the inner peripheral surface is formed into a taper hole shape gradually and smoothly increased in diameter at a portion between a throat portion 100, which is a minimum diameter portion of the step taper surface 99, and the further tip end side.

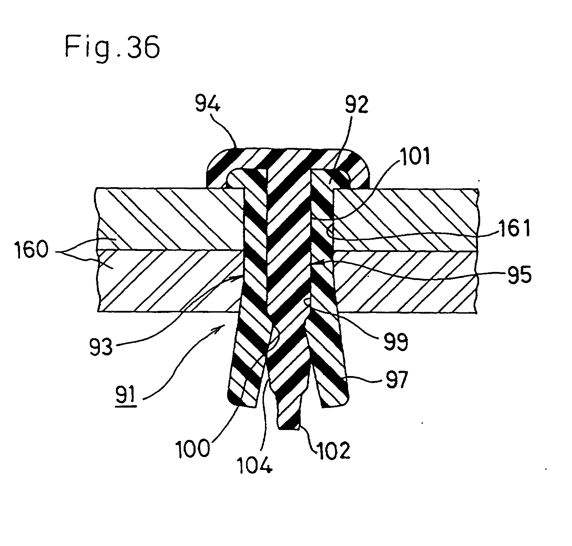

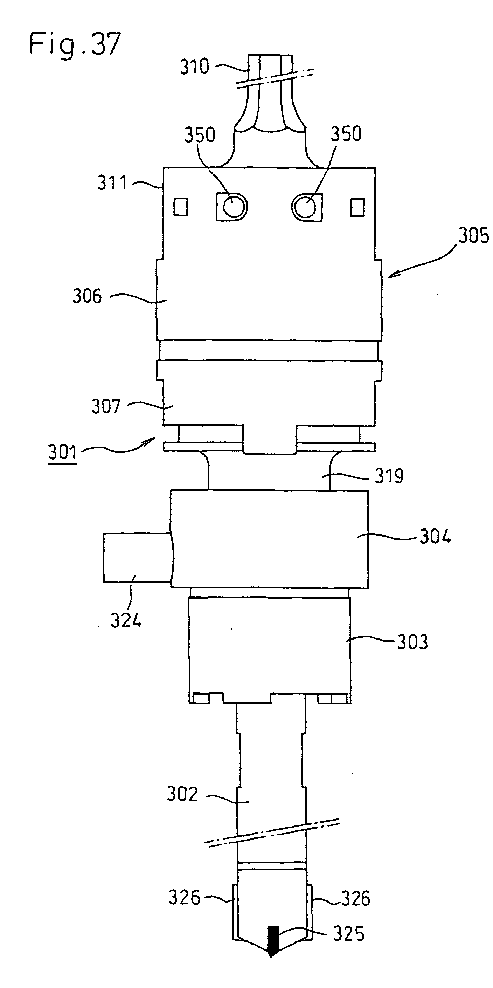

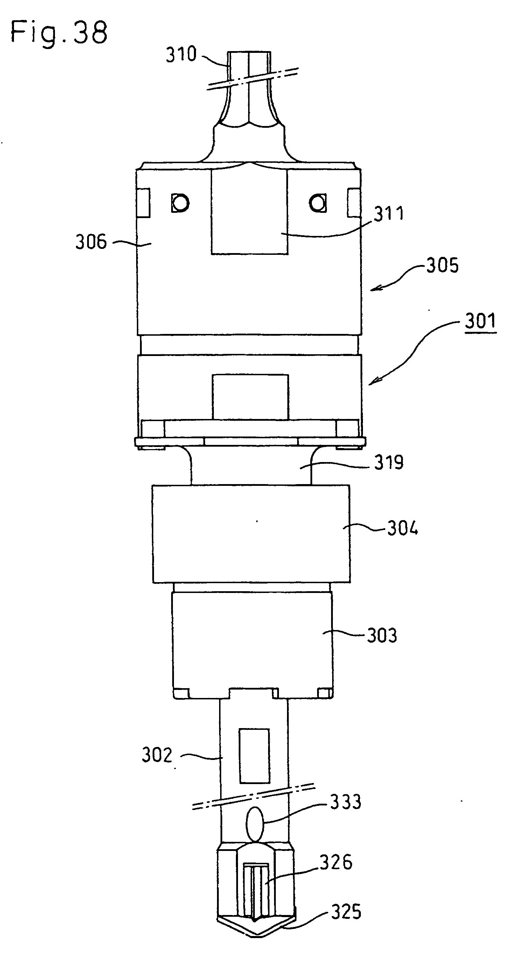

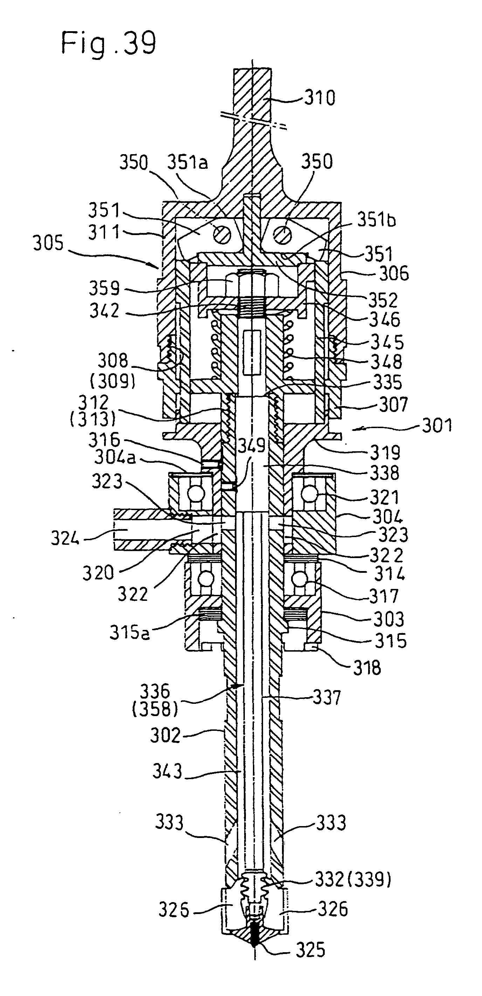

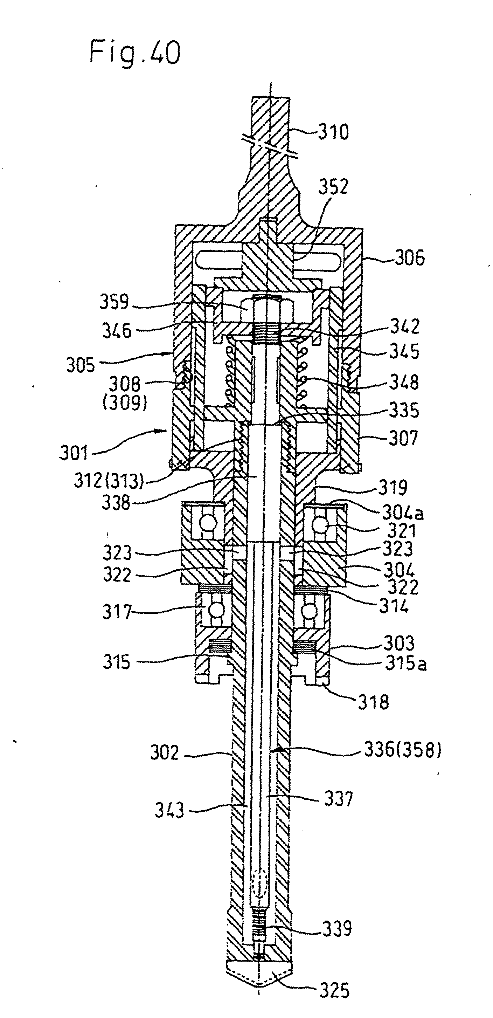

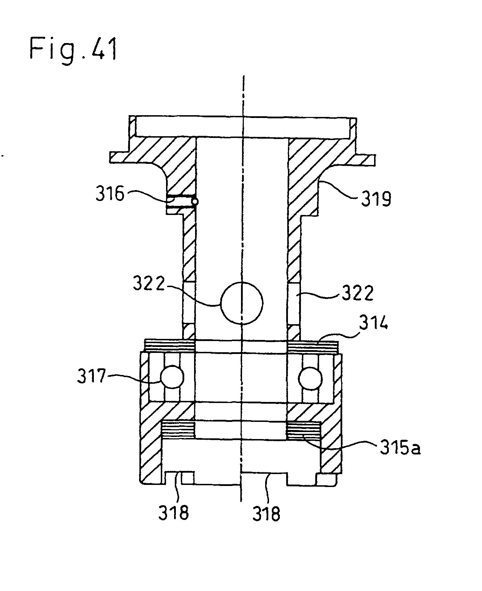

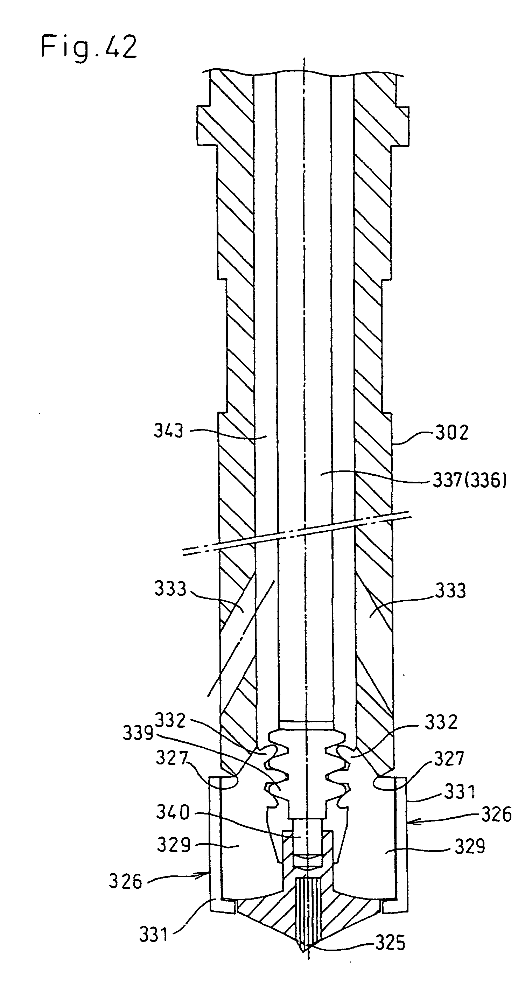

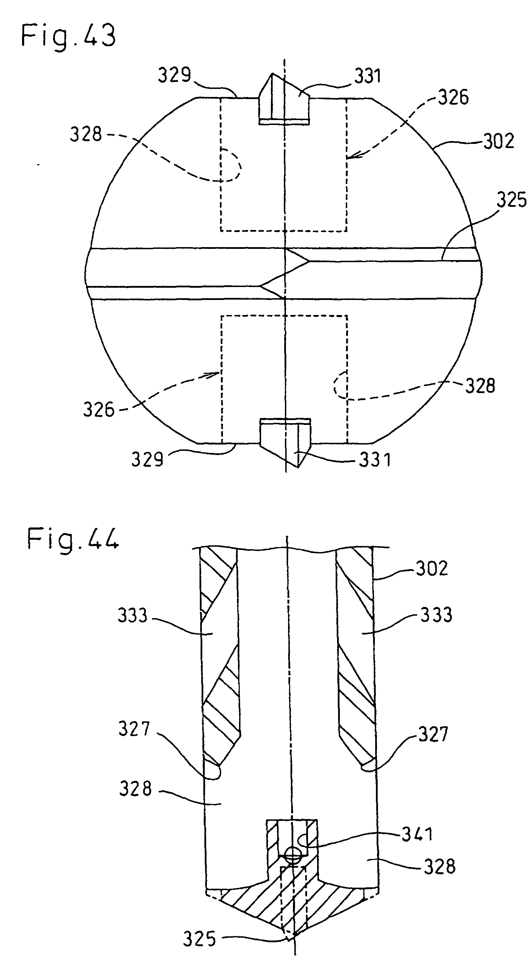

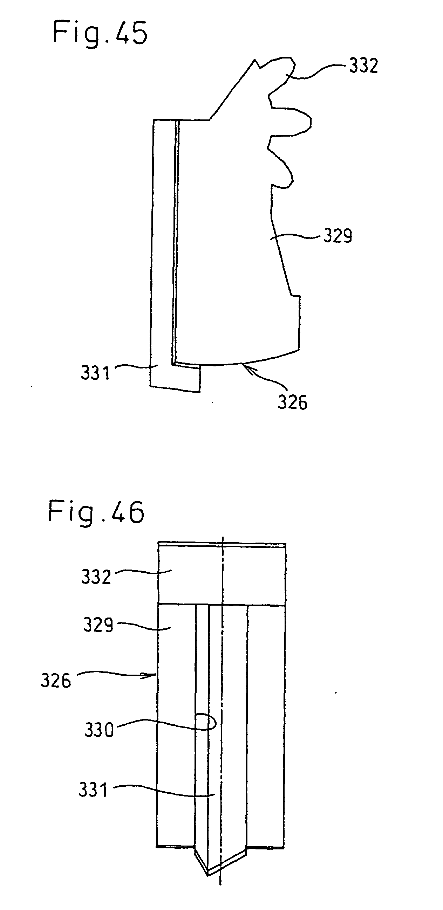

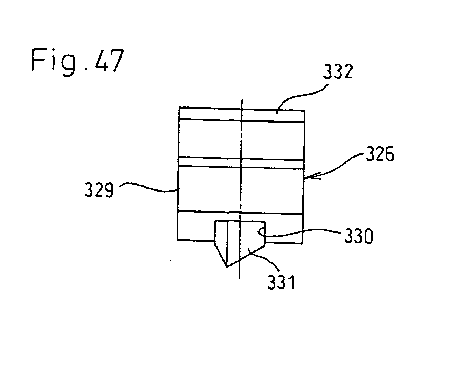

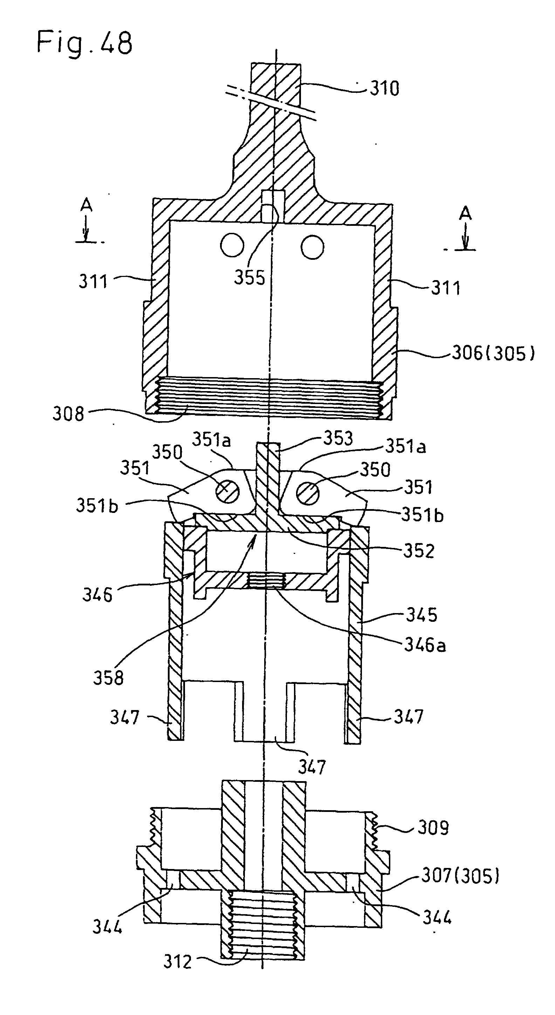

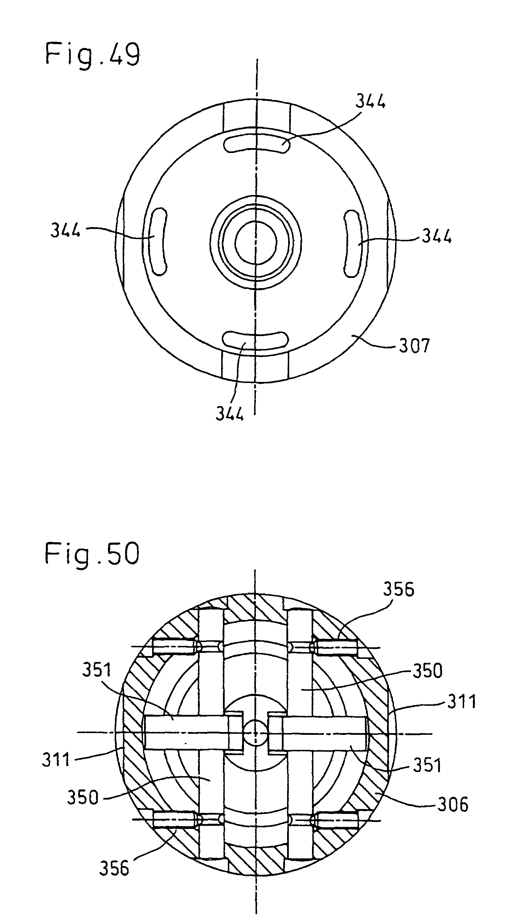

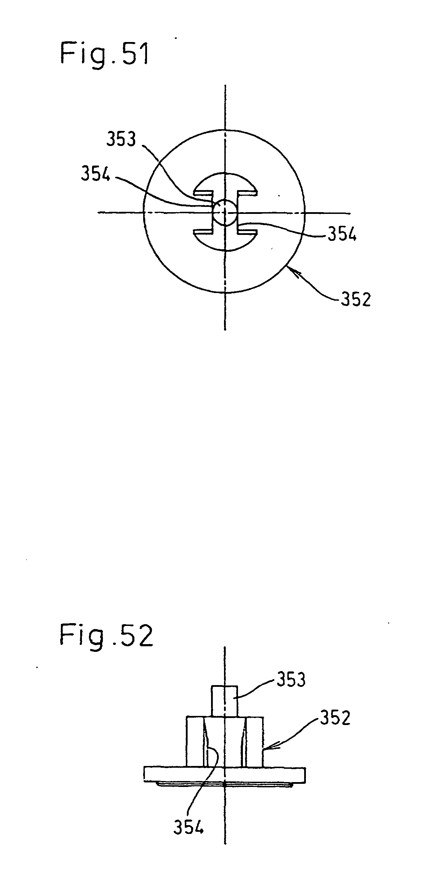

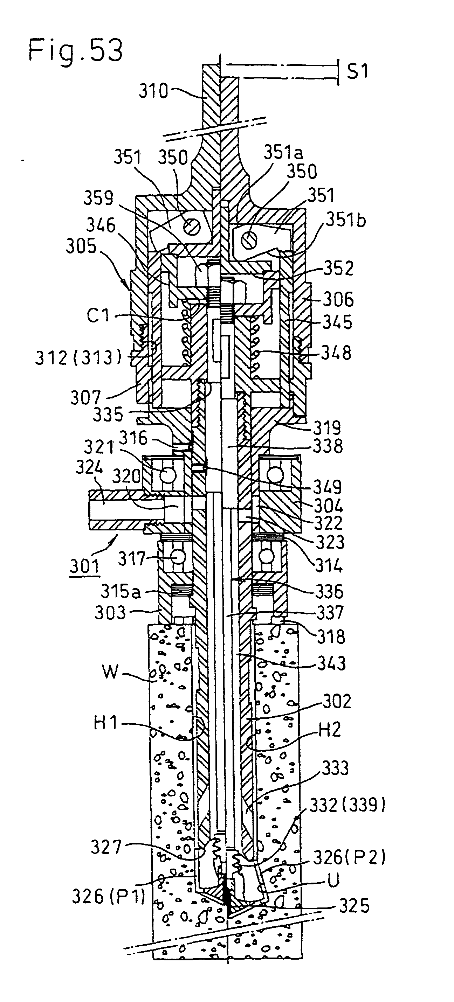

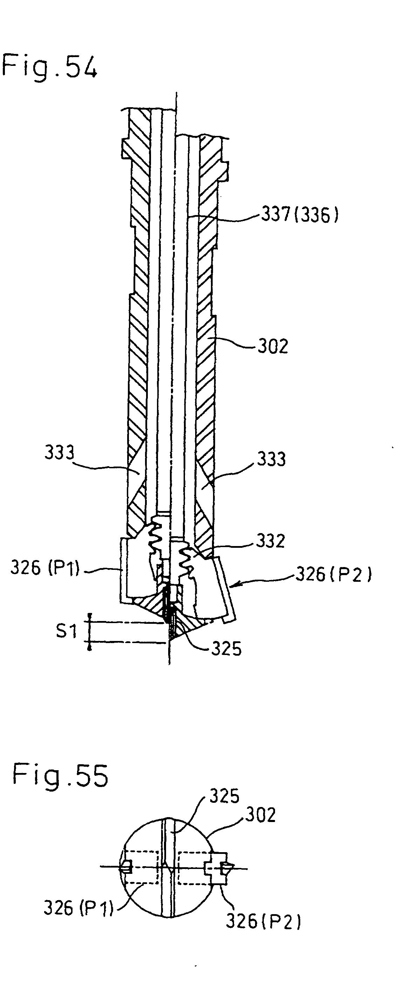

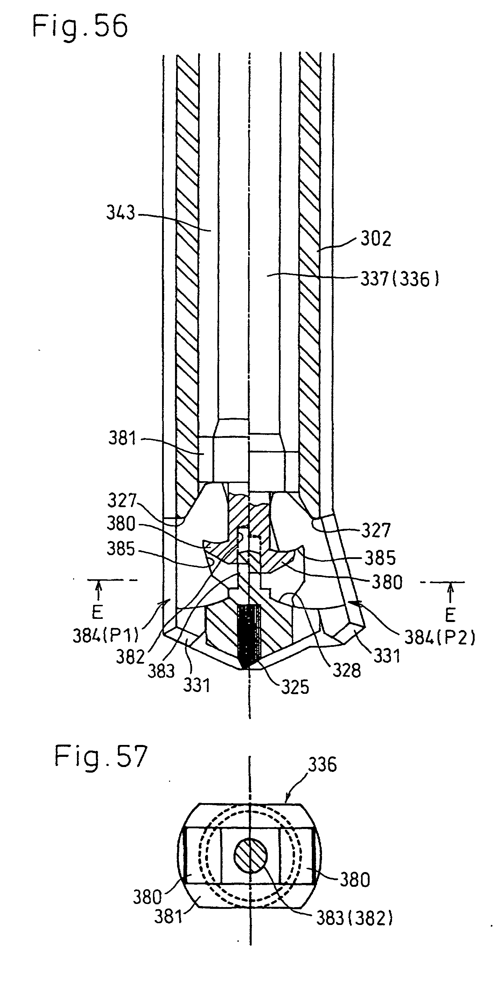

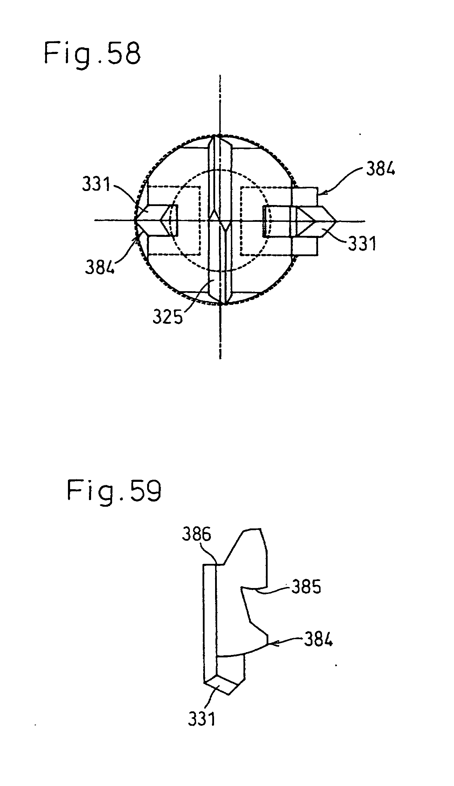

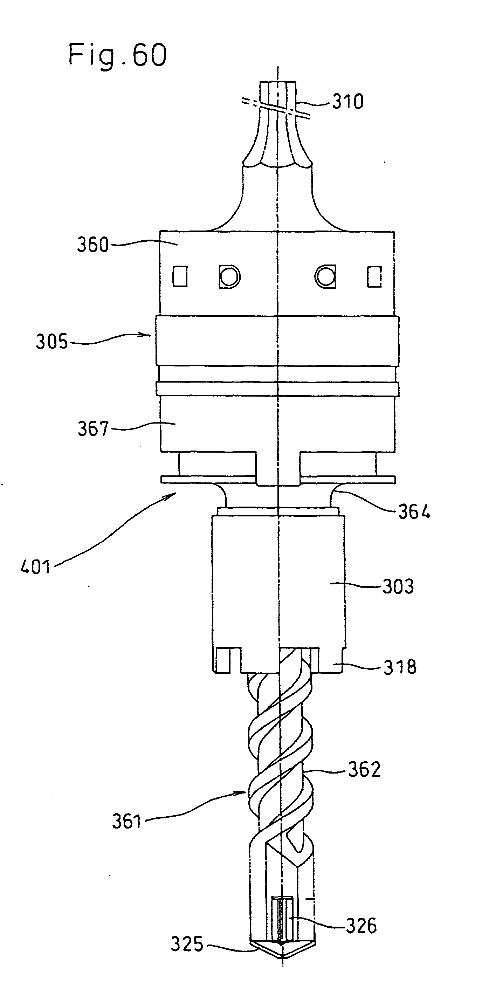

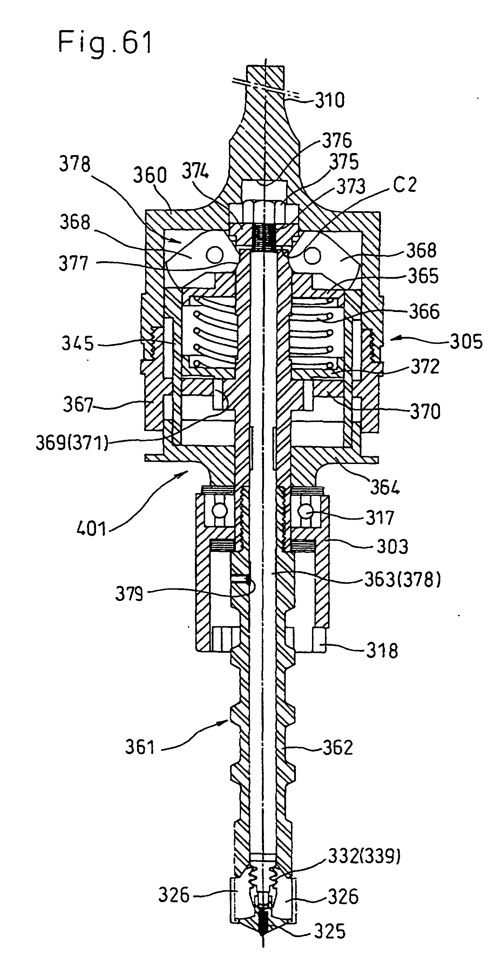

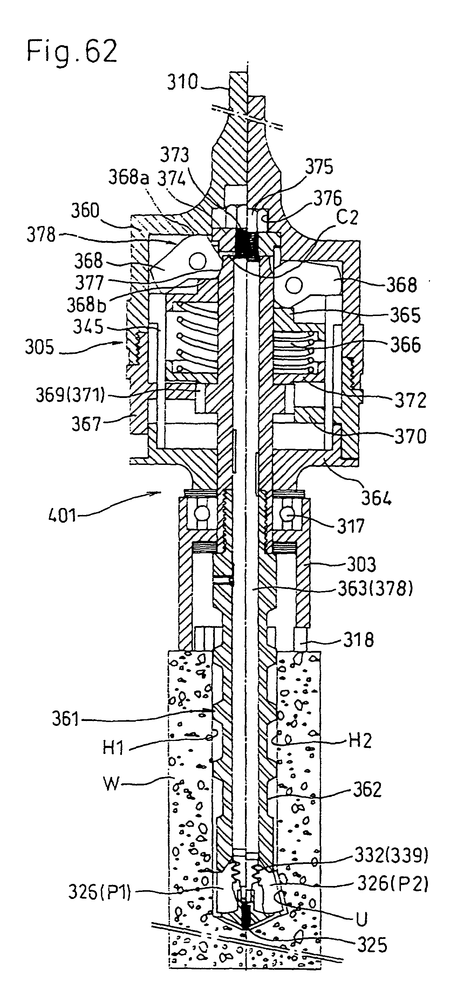

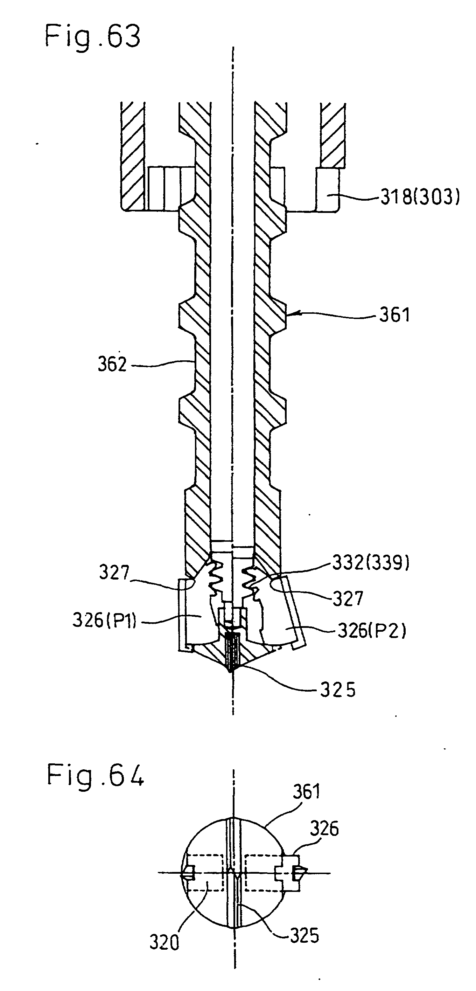

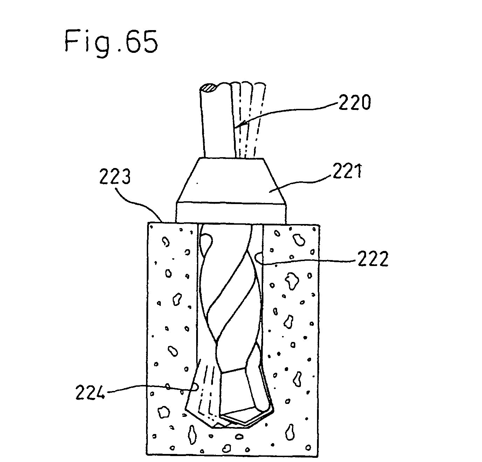

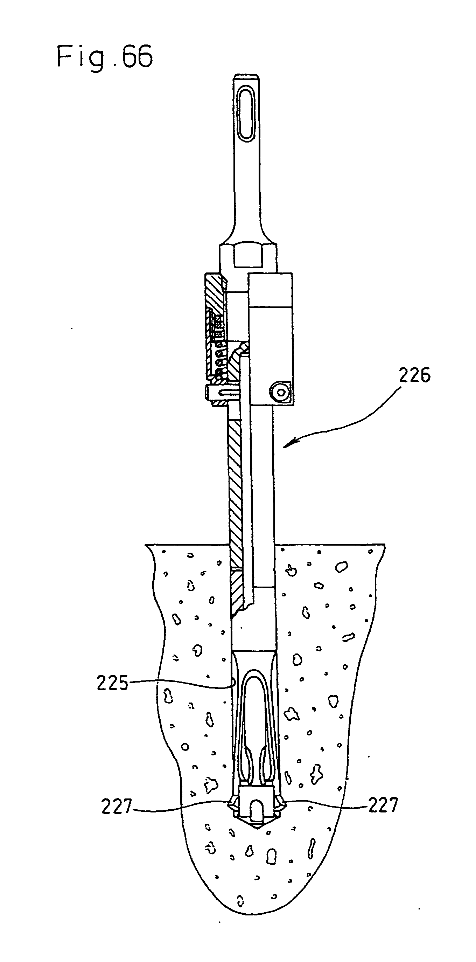

On the other hand, the plug 95 is set so that a shaft portion 101 thereof is slightly greater in length than the sleeve 93. As shown in Fig. 36, the plug 95 is provided at its tip end portion with a tip end projection 102 which is slightly greater in diameter than a throat portion 100 of the minimum diameter in the expansion portion 97 of the sleeve 93, and is provided at the longitudinal center portion of the shaft portion 101 with a neck portion 103 of a small diameter portion. Further, there is provided a barrel-shaped step taper shaft portion 104 constituted by several taper surfaces for smoothly expanding the expansion portion 97 between the tip end projection 102 and the neck portion 103. The shape of the step taper shaft portion 104 corresponds to a shape of the step taper surface 99 of the inner periphery of the non-extended expansion portion 97. The shape of the neck portion 103 corresponds to a shape of the throat portion 100 at the inner periphery of the expansion portion 97 expanded as shown in Fig. 36.

By press-fitting the plug 95 into the sleeve 72 form the direction of the head portion 92 in order to combine the sleeve 93 and the plug 95 by the press-fit connection, in addition that the step taper shaft portion 104 and the general shaft portion in the shaft portion of the plug 95 are press-fitted to the general inner peripheral surface of the sleeve 93, the step taper shaft portion 104 is fitted with the step taper surface 99 of the sleeve 93, and simultaneously the tip end projection 102 of the plug 95 rides over and is engaged with the throat portion 100. As a result, the step taper shaft portion 104 and the tip end projection 102 of the plug 95 are engaged with the step taper surface 99 and the throat portion 100 of the sleeve 93 by the convexoconcave engagement. Therefore, a detaching preventing effect is generated due to the relative positioning. The fastener 91 in the pre-installation is arranged such that the sleeve 93 and the plug 95 are not separated from each other.

The installation procedure of the thus arranged resin fastener 91 is executed as follows, as shown in Fig. 35. The sleeve 93 of the fastener 91 is inserted to a prepared hole 161 previously formed at a structure 160 to be combined. Under a condition that the expansion portion 97 of the sleeve 93 projects from a back surface of the structure 160 by a predetermined quantity and that the head portion 92 of the sleeve 93 is seated on the structure 160, the plug 95 is hammered to the sleeve 93 until the tip end portion of the plug 95 projects from the end portion of the expansion portion of the sleeve 93, in order to overlap the head portion 92 of the sleeve 93 and the head portion 94 of the plug 95.

At this time, as shown in Fig. 36, the convexoconcave engagement between the step taper shaft portion 104 of the plug 95 and the step taper surface 99 of the sleeve 93 is disengaged by the hammering of the plug 95, and the expansion portion 97 is expanded into a skirt shape. Since the neck portion 103 of the plug 95 is engaged with the throat portion 97 at the inner periphery of the expansion portion 97 by the convexoconcave engagement and since the installation feeling due to this convexoconcave engagement is obtained, it is confirmed from the installation feeling that the expansion portion 97 is expanded by a predetermined quantity. Simultaneously, by the convexoconcave engagement between the sleeve 93 and the plug 95, both of them are relatively positioned. Therefore, a loosening preventing effect between the sleeve 93 and the plug 95 installed (expanded) is generated so as to sufficiently endure the vibrations and the like.

On the other hand, when it is desired to disengage the connection of the fastener which has been once installed, the plug 95 may be drawn out from the prepared hole 161 together with the sleeve 93 by hammering the plug 95 in the direction opposite to the installation direction to cancel the expansion of the expansion portion 97.

To enable the disassembly in opposite to the installation is the merit of the resin fastener 91 having a self recovery property of material. Particularly, if it is employed in fixing of a circuit board for electric products or installation of vehicular interiors, it is effective to execute recycle of separately recovering a specific parts in the disassembly of spent products.

## Claims

1. A fastener (1, 41, 61, 71, 91) of a post-installation anchor type comprising a sleeve (2, 42, 72, 93) having an expansion portion (6, 45, 76, 97) and a plug (3, 48, 78, 95) having a taper portion for expanding the expansion portion by being installed in the sleeve, the fastener being **characterized**
**in that** the sleeve (2, 42, 72, 93) and the plug (3, 48, 78, 95) are engaged with each other by a first convexoconcave engagement so as to prevent a mutual detachment between the sleeve and the plug under the non-expanded condition of the expansion portion, and
**in that** an inner peripheral surface of the expansion portion (6, 45, 76, 97) and an outer peripheral surface of the plug (3, 48, 78, 95) are again engaged by a second convexoconcave engagement when the expansion portion is expanded by a predetermined quantity by hammering the sleeve or the plug.

2. The fastener according to claim 1, **characterized in that** the fastener is of an inner cone hammering type in which the plug (3) has a length shorter than that of the sleeve (2) and is previously inserted within a range of the length of the sleeve, a flange portion (8) press-fitted into a prepared hole (15, 15a) of an opposite member is formed at an outer periphery of an end portion opposite to the expansion portion (6) in the sleeve (2), and the plug (3) is hammered by utilizing a friction force between the flange portion (8) and an inner peripheral surface of the prepared hole (15, 15a).

3. The fastener according to claim 2, **characterized in that** a circumferential groove (10) is formed at an inner periphery of the flange portion (8) from an end surface of the sleeve (2).

4. The fastener according to one of the previous claims 1 or 2, **characterized in that** a large diameter portion (49, 63, 79) greater in diameter than that of the plug (48) is integral with the plug to form an anchor main body portion (43, 62, 73) as a stepped-shaft shape member, the large diameter portion having an outer diameter generally the same as that of the sleeve (42, 72, 93), there being a predetermined relative movement stroke to a step portion (50, 81) of the anchor main body portion and that by hammering the anchor main body portion by the relative movement stroke under the condition that the sleeve is seated to the prepared hole, the large diameter portion of the anchor main body portion is press-fitted to the prepared hole.

5. The fastener according to one of the previous claims 1 or 2, **characterized in that** an anchor main body portion is formed into a stepped-shaft shape member by the plug having a tapered portion and a large diameter portion greater in diameter than that of the plug, the large diameter portion having an outer diameter generally the same as that of the sleeve, there being a predetermined relative movement stroke to a step portion of the anchor main body portion, wherein the engagement between the expansion portion and outer peripheral portion of the plug in the first convexoconcave engagement is disengaged by a predetermined hammering, engagement of the inner peripheral surface of the expansion portion and the outer peripheral surface of the plug by the second convexoconcave engagement generates a connection feeling.

6. The fastener according one of the claims 2 to 5, **characterized in that** the prepared hole (15, 15a) is of an undercut type in which a portion (15a) near a hole bottom portion of the prepared hole is enlarged in diameter into a tapered shape.

7. The fastener according to one of the claims 4 to 6, **characterized in that** one of a female screw portion and a male screw portion (51, 65, 80, 211) is formed at the large diameter portion of the anchor main body portion.

8. The fastener according to one of the former claims 5 or 6, **characterized in that** a reinforcing bar (64) for reinforced concrete is integrally formed with the large diameter portion (63) of the anchor main body portion (62) in the form of extending therefrom, and a male screw portion (65) is formed at an intermediate portion between the large diameter portion and the reinforcing bar, and a lug nut (66) is previously tightened to the male screw portion (65).

9. The fastener according to claim 1, **characterized in that** said fastener is made of resin with a self-recovery property to enable disassembly.

## Patentansprüche

1. Befestigungselement (1, 41, 61, 71, 91) eines Nachinstallationsverankerungstyps mit einer Hülse (2, 43, 72, 93), welche einen Expansionsbereich (6, 45, 76, 97) aufweist und einem Stift (3, 48, 78, 95) mit einem konischen Abschnitt zur Expansion des Expansionsabschnitts durch Einsetzen in die Hülse, wobei das Befestigungselement dadurch charakterisiert ist, dass Hülse (2, 42, 72, 23) und Stift (3, 48, 78, 95) miteinander durch einen ersten Konvex/Konkaveingriff in Eingriff geraten, um ein beiderseitiges Lösen zwischen Hülse und Stift bei nicht expandiertem Zustand des Expansionsabschnitts zu verhindern, und das eine innere Umfangsfläche des Expansionsabschnitts (6, 45, 76, 97) und eine äußere Umfangsfläche des Stifts (3, 48, 78, 95) wiederum durch einen zweiten Konvex/Konkaveingriff miteinander in Eingriff geraten, wenn der Expansionsabschnitt um eine vorbestimmte Größerdurch Hämmern von Hülse oder Stift expandiert wird.

2. Befestigungselement nach Anspruch 1, **dadurch gekennzeichnet, dass** das Befestigungselement von einem Innenkonushammertyp ist, bei dem der Stift (3) eine Länge geringer als die der Hülse (2) aufweist und vorher in der Hülse mit einem vorbestimmten Bereich von deren Länge eingesetzt ist, ein Flanschabschnitt (8) in eine vorbereitete Öffnung (15, 15a) eines Gegenbauteils durch Presssitz eingebracht ist, welches Gegenbauteil an einem Außenumfang eines Endabschnitts gegenüberliegend zum Expansionsabschnitt (6) in der Hülse (2) gebildet ist, und wobei der Stift (3) unter Verwendung einer Reibungskraft zwischen dem Flanschabschnitt (8) und der inneren Umfangsfläche vorbereiteten Öffnung (15, 15a) gehämmert wird.

3. Befestigungselement nach Anspruch 2, **dadurch gekennzeichnet, dass** eine Umfangsnut (10) an einem Innenumfang des Flanschabschnitts (8) von einer Endfläche der Hülse (2) gebildet ist.

4. Befestigungselement nach einem der vorangehenden Ansprüche 1 oder 2, **dadurch gekennzeichnet, dass** ein Großdurchmesserabschnitt (49, 63, 79) mit einem Durchmesser größer als der des Stiftes (48) einteilig mit dem Stift gebildet ist, um einen Ankerhauptkörperabschnitt (43, 62, 73) als abgestuftes Spindelformteil zu bilden, wobei der Großdurchmesserabschnitt einen Außendurchmesser im Allgemeinen gleich dem der Hülse (42, 72, 93) aufweist, und ein vorbestimmter, relativer Bewegungshub zum abgestuften Abschnitt (50, 81) des Ankerhauptkörperabschnitts vorliegt und bei Hämmern des Ankerhauptkörperabschnitts durch den relativen Bewegungshub unter der Bedingung, dass die Hülse in der vorbereiteten Öffnung eingesetzt ist, der Großdurchmesserabschnitt des Ankerhauptkörperabschnitts in die vorbereitete Öffnung unter Druck eingepasst ist.

5. Befestigungselement nach einem der vorangehenden Ansprüche 1 oder 2, **dadurch gekennzeichnet, dass** ein Ankerhauptkörperabschnitt als abgestuftes Spindelformteil durch Stift mit einem Konusabschnitt und einem Großdurchmesserabschnitt mit einem Durchmesser größer als der des Stiftes gebildet ist, wobei der Großdurchmesserabschnitt einen Außendurchmesser im Wesentlichen gleich der der Hülse aufweist, wobei ein vorbestimmter relativer Bewegungshub zu einem abgestuften Abschnitt des Ankerhauptkörperabschnitts vorliegt, und wobei der Eingriff zwischen dem Expansionsabschnitt und dem Außenumfangsabschnitt des Stifts bei dem ersten Konvex/Konkaveingriff durch ein vorbestimmtes Hämmern gelöst ist und Eingriff der Innenumfangsfläche des Expansionsabschnitts und der Außenumfangsfläche des Stifts durch den zweiten Konvex/Konkaveingriff ein Verbindungsgefühl erzeugt.

6. Befestigungselement nach einem der Ansprüche 2 bis 5, **dadurch gekennzeichnet, dass** die vorbereitete Öffnung (15, 15a) vom hinterschnittenen Typ ist, bei der ein Abschnitt (15a) nahe einem Öffnungsbodenabschnitt der vorbereiteten Öffnung im Durchmesser in eine Konusform erweitert ist.

7. Befestigungselement nach einem der Ansprüche 4 bis 6, **dadurch gekennzeichnet, dass** ein Einschraubabschnitt und ein Verschraubabschnitt (51, 65, 80, 211) in dem Großdurchmesserabschnitt des Ankerhauptkörperabschnitts gebildet sind.

8. Befestigungselement nach einem der Ansprüche 5 oder 6, **dadurch gekennzeichnet, dass** eine Armierstange (64) zur Betonarmierung einteilig mit dem Großdurchmesserabschnitt (63) des Ankerhauptkörperabschnitts (62) von diesem abstehend gebildet ist und ein Verschraubabschnitt (65) als ein mittlerer Abschnitt zwischen dem Großdurchmesserabschnitt und der Armierverstärkungsstange gebildet ist, wobei eine Schließmutter (66) vorher auf dem Verschraubabschnitt (65) befestigt ist.

9. Befestigungselement nach Anspruch 1, **dadurch gekennzeichnet, dass** das Befestigungselement aus einem Kunststoff mit Selbsterholungseigenschaft hergestellt ist, um ein Auseinandemehmen zu ermöglichen.

## Revendications

1. Elément de fixation (1, 41 61, 71, 91) d'un type d'ancrage post-installation comprenant un manchon (2, 42, 72, 93) présentant une portion d'expansion (6, 45, 76, 97) et un bouchon (3, 48, 78, 95) présentant une portion diminuée pour faire expanser la portion d'expansion en étant installé dans le manchon, l'élément de fixation étant **caractérisé**
**en ce que** le manchon (2, 42, 72, 93) et le bouchon (3, 48, 78, 95) sont mis en prise l'un avec l'autre par un premier engagement convexe-concave de manière à empêcher un détachement mutuel entre le manchon et le bouchon à l'état non expansé de la portion d'expansion, et
**en ce qu'**une surface périphérique interne de la portion d'expansion (6, 45, 76, 97) et une surface périphérique externe du bouchon (3, 48, 78, 95) sont de nouveau mises en prise par un second engagement convexe-concave lorsque la portion d'expansion est expansée selon une quantité prédéterminée en martelant le manchon ou le bouchon.

2. Elément de fixation selon la revendication 1, **caractérisé en ce que** l'élément de fixation est d'un type de martelage à cône interne dans lequel le bouchon (3) a une longueur plus courte que celle du manchon (2) et est inséré préalablement dans une plage de la longueur du manchon, une portion de bride (8) insérée par pression dans un trou préparé (15, 15a) d'un élément opposé est formée à une périphérie extérieure d'une portion d'extrémité opposée à la portion d'expansion (6) dans le manchon (2), et le bouchon (3) est martelé en utilisant une force de friction entre la portion de bride (8) et une surface périphérique interne du trou préparé (15, 15a).

3. Elément de fixation selon la revendication 2, **caractérisé en ce qu'**une rainure circonférentielle (10) est formée à une périphérie interne de la portion de bride (8) à partir d'une surface d'extrémité du manchon (2).

4. Elément de fixation selon l'une des revendications précédentes 1 ou 2, **caractérisé en ce qu'**une portion de grand diamètre (49, 63, 79), d'un diamètre plus grand que celui du bouchon (48), est intégrale avec le bouchon pour former une portion de corps principale d'ancrage (43, 62, 73) comme élément d'une forme à arbre étagé, la portion de grand diamètre ayant un diamètre extérieur généralement le même que celui du manchon (42, 72, 93), il existe une course de mouvement relatif prédéterminée à une portion à gradin (50, 81) de la portion de corps principal d'ancrage, et **en ce que**, en martelant la portion de corps principale d'ancrage selon la course de mouvement relatif dans l'état où le manchon est logé dans le trou préparé, la portion de grand diamètre de la portion de corps principale d'ancrage est ajustée d'une manière serrée dans le trou préparé.

5. Elément de fixation selon l'une des revendications précédentes 1 ou 2, **caractérisé en ce qu'**une portion de corps principale d'ancrage est formée en un élément d'une forme d'arbre étagé par le bouchon ayant une portion diminuée et une portion de grand diamètre dont le diamètre est plus grand que celui du bouchon, la portion de grand diamètre ayant un diamètre externe généralement le même que celui du manchon, une course de mouvement relatif prédéterminée étant réalisée à une portion à gradin de la portion de corps principale d'ancrage, où la prise entre la portion d'expansion et la portion périphérique externe du bouchon dans la première prise convexe-concave est relâchée par un martelage prédéterminé, la prise de la surface périphérique interne de la portion d'expansion et de la surface périphérique externe du bouchon par la seconde prise convexe-concave génère une sensation de connexion.

6. Elément de fixation selon l'une des revendications 2 à 5, **caractérisé en ce que** le trou préparé (15, 15a) est d'un type dégagé où une portion (15a) près d'une portion inférieure du trou préparé est agrandie en diamètre en une forme conique.

7. Elément de fixation selon l'une des revendications 4 à 6, **caractérisé en ce qu'**une d'une portion de vis femelle et d'une portion de vis mâle (51, 65, 80, 211) est formée à la portion de grand diamètre de la portion de corps principale d'ancrage.

8. Elément de fixation selon l'une des revendications précédentes 5 ou 6, **caractérisé en ce qu'**une barre de renforcement (64) pour du béton armé est réalisée intégralement avec la portion de grand diamètre (63) de la portion de corps principale d'ancrage (62) sous la forme s'étendant de celle-ci, et une portion de vis mâle (65) est formée à une portion intermédiaire entre la portion de grand diamètre et la barre de renforcement, et un écrou à oreilles (66) est serré préalablement à la portion de vis mâle (65).

9. Elément de fixation selon la revendication 1, **caractérisé en ce que** ledit élément de fixation est réalisé en résine avec une propriété d'auto-récupération pour permettre le démontage.
